# EUROPEAN PATENT SPECIFICATION

(11) **EP 1 135 913 B1**
(45) Date of publication and mention of the grant of the patent: **01.09.2004**
(21) Application number: 99949144.2
(22) Date of filing: 23.09.1999
(51) Int. Cl.: H04L 29/06

(54) **INTERACTIVE MEDIA SYSTEM**
INTERAKTIVES MEDIASYSTEM
SYSTEME DE MEDIA INTERACTIF

(30) Priority: 03.12.1998 GB 9826640
(43) Date of publication of application: 26.09.2001
(73) Proprietor: Red Fig Limited, London, W1X 3RB (GB)
(72) Inventor: ELLISON, Julian Goring Archdale, Charlbury, Oxford OX7 3EL (GB); SMITH, Mark Gregory, Norwich NR1 2HT (GB); MORAD, Shimon, London SW2 3BE (GB); TAPACCOS, Alexandros Constantinos, London SW2 3BE (GB); JI, Yongchun, Colindale, London NW9 5JS (GB); HANDLEY, James William, London W1N 1FT (GB)
(74) Representative: Geary, Stuart Lloyd
(86) International application number: PCT/GB1999/003183
(87) International publication number: WO 2000/033533

(56) References cited:
- EP-A- 0 742 670
- EP-A- 0 822 490
- WO-A-94/05117
- WO-A-97/19556
- WO-A-97/21281
- WO-A-97/41688
- WO-A-98/11744
- US-A- 5 819 019
- MEYER M ET AL: "THE ON-THE-MOVE CONCEPT FOR MOBILE MIDDLEWARE" ISS. WORLD TELECOMMUNICATIONS CONGRESS. (INTERNATIONAL SWITCHING SYMPOSIUM),CA,TORONTO, PINNACLE GROUP, page 373-378 XP000704489
- GOLDING D ET AL: "MOBILE MULTIMEDIA APPLICATIONS" BRITISH TELECOMMUNICATIONS ENGINEERING,GB,BRITISH TELECOMMUNICATIONS ENGINEERING. LONDON, vol. 17, no. 1, page 18-24 XP000765545 ISSN: 0262-401X
- ERLANDSON C ET AL: "WAP-the wireless application protocol" ERICSSON REVIEW,SE,ERICSSON. STOCKHOLM, vol. 75, no. 4, 1998, pages 150-153-153, XP002101097 ISSN: 0014-0171

## Description

The present invention relates to an interactive media system including a user interface comprising an output device having a visual output user interface part located for private use and user input means located for use by a user concurrently with the output user interface part, and a server. The present invention also relates to a method of providing interactivity to a user and to a server apparatus for a data dissemination system employing a messaging service of a mobile telephone network and a client with a web browser.

In recent years, there has been a rapid growth in the provision of interactive services using the World Wide Web and proposals have been made for interactive television. However, each of the present interactive systems stands alone and cannot generally combine different output media, although a system combining mobile telephones and public display screens is disclosed in WO-A-9851068.

The aim of the present invention is to provide a common architecture for the interactive provision of information, entertainment and services.

An interactive media system, according to the present invention, is characterized by the server comprising:-
a state machine;
an input routing means for receiving a message from the user input means, the message comprising a session reference and data, and for routing at least the data part a received message to the state machine in dependence on the session reference; and
output routing means for routing messages, comprising at least a destination reference and control data for the output device, and for routing said control data to the output device in dependence on said destination reference,
wherein the state machine is responsive to data routed to it by the input routing means to generate a message, comprising at least a destination reference.

The output routing means preferably receives messages from the state machine. However the output routing function can be provided by the state machine itself.

The session reference may comprise, for example, a session ID or a message source ID which can be used to identify a session.

Thus, the present invention differs from the system disclosed in WO-A-9851068 in that the visual output user interface is located for private use in contrast to the large public displays disclosed in WO-A-9851068.

In the context of the present application, "state machine" means a hardware or software element that can exist in a predetermined number of states and can make a limited number of transitions from one state to another, in response to input signals or the state of some variable when that variable is inspected.

Preferably, a system according to the present invention includes an additional processing apparatus, wherein said destination reference may refer selectively to the user interface or the additional processing means. Consequently, the server can control some operation other than the generation of the user interface output.

The server may comprise a plurality of state machines, each state machine being responsive to data routed to it by the input routing means to provide a message, comprising at least a destination reference identifying the output device and control data for the output device, to the output routing means. A separate state machine is preferably provided for each session. The control data for the output device is an instruction to the output device not, for example, an image or audio data signal.

The or each state machine may comprise an instance of a software object or a component. If the or each state machine comprises a component, the input and output routing means preferably exist in the same process space and the or each component exists in its own process space.

Preferably, the operation, e.g. allowable state transitions, of the or each state machine is defined, at least in part, by a respective control file. The or each control file may comprise data in the form of a mark-up language. More preferably, the or each state machine comprises a software object, the state changes of the state machine being defined in some cases by methods of said object and in other cases by the contents of the respective control file. This enables messages not generated directly by the user, e.g. for synchronization of audio and video aspects of the user interface, to be treated in a standard manner so that they do not need to be considered by content designers when producing a control file.

The input and output routing means may comprise a single software procedure or object. This means that the messages from the state machines can be the result of function methods invoked with incoming messages as parameters.

In one embodiment, the user interface comprises a portable computing device having a web browser program and an associated mobile telephone means and said messages are sent between the server and the mobile telephone means by means of a messaging service.

In another embodiment, the user interface comprises a telephone and a web server. Such a system may be an electronic commerce system in which sensitive information is entered by the user operating the buttons on a telephone rather than by entering the data in an HTML form for transmission via the Internet. Preferably, in such a system, the server will communicate with a financial service provider for confirming that funds are available for a purchase from a vendor, represented to the user by the web server. If the server is operated by a telephone company, the purchases made using the system could be notified in the user's telephone bill.

In yet another embodiment, the user interface comprises a telephone and a television broadcasting apparatus. Such a system can be used to provide interactive services in association with a broadcast television programme.

According to the present invention, there is provided a method of providing interactivity to a user, the method including the steps of:-
receiving a first message from a user input means of a user interface, the user interface comprising an output device having a visual output user interface part located for private use and the user input means being located for use by a user concurrently with the output user interface part and the message comprising a session reference and data;
routing said first message to a state machine;
using said state machine to generate a second message, comprising at least a destination reference and control data, in response to data in said first message; and
routing said second message to said output device in dependence on said destination reference.

A method according to the present invention may include the steps of:-
receiving a third message from said user input means;
routing said third message to said state machine;
using said state machine to generate a fourth message, comprising at least a destination reference and data, in response to data in said third message; and routing said fourth message to a device other than said user interface.

Preferably, said state machine is selected from a plurality of state machines in dependence on said session reference.

Preferably, the or each state machine comprises an instance of a software object.

Preferably, the operation of the or each state machine is defined, at least in part, by a respective control file. More preferably, the or each control file comprises data in the form of a mark-up language.

The or each state machine may comprise a software object, the state changes of the state machine being defined in some cases by methods of said object and in other cases by the contents of the respective control file.

The user interface may comprise a portable computing device having a web browser program and an associated mobile telephone means and said messages are sent between the server and the mobile telephone means by means of a messaging service, or a telephone and a web server, or a telephone and a television broadcasting apparatus.

According to the present invention, there is also provided a server apparatus for a data dissemination system employing a messaging service of a mobile telephone network and a client with a web browser, the apparatus comprising
receiving means for receiving messages from a mobile telephone network;
dispatching means for dispatching message service messages to a mobile station of a mobile telephone network; and
a server comprising:-
a state machine;
an input routing means for receiving a message from the receiving means, the message comprising a session reference and data, and for routing at least the data part a received message to the state machine in dependence on the session reference; and
output routing means for routing messages, comprising at least a destination reference and control data for the output device, and for routing said control data to the output device in dependence on said destination reference,
wherein the state machine is responsive to data routed to it by the input router to generate a message, comprising at least a destination reference.

The receiving means is preferably configured for receiving message service messages.

Preferably, the processing means comprises a database of users of clients, means for analysing a message, received by the receiving means, to determine to which of a set of supported browser pages it relates, and means for generating object instances, each instance being related to a browser page and a user, wherein said objects have a method for generating output data, to be included in a message service message for dispatch by the dispatching means, on the basis of a received message.

A feature of message services, such as the GSM short message service, is that subscribers can conduct calls during the transmission and reception of short message service messages. Consequently, users interacting with a server apparatus according to the present invention can talk to each other whilst viewing the same live data using their browsers. Thus, users playing the above-described chess game can converse while playing the game.

Embodiments of the present invention will now be described, by way of example, with reference to the accompanying drawings, in which:
Figure 1 is a conceptual block diagram of a server for a system embodying the present invention;
Figure 2 is a block diagram of a first embodiment of a plurality of state machines;
Figure 3 is a block diagram of a second embodiment of a plurality of state machines;
Figure 4 shows a first system according to the present invention;
Figure 5 is a data flow diagram illustrating the operation of a client of Figure 4;
Figure 6 is a functional block diagram of the server of Figure 4;
Figure 7 is a data flow diagram illustrating the configuration and operation of the server of Figure 4;
Figure 8 shows a browser page for a financial ticker tape service;
Figure 9 shows a ticker tape service access browser page;
Figures 10 and 11 shows chess game browser pages for first and second players;
Figure 12 shows a second system according to the present invention;
Figure 13 is a functional block diagram of the server of Figure 12;
Figure 14 is a state diagram for a state machine of the server of Figure 13;
Figure 15 shows a third system according to the present invention; and
Figure 16 shows a television image broadcast by the system of Figure 15.

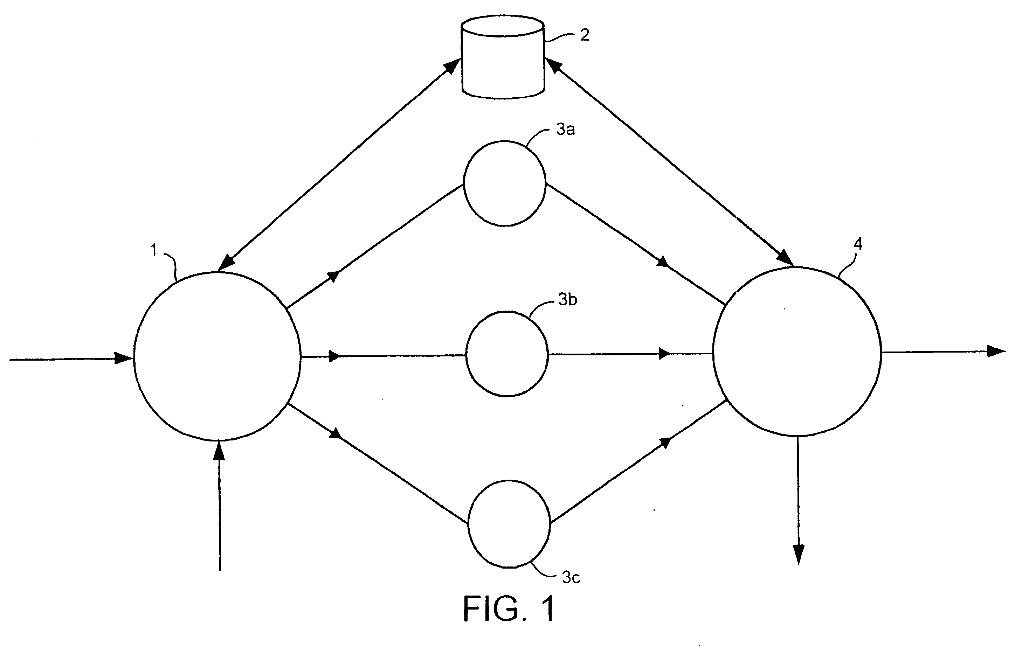

Referring to Figure 1, a server comprises an input router 1, a database 2, a plurality of state machines 3a, 3b, 3c and an output router 4. The input router 1 receives input data from a plurality of sources, e.g. mobile telephones, web browsers, in messages. These messages contain at least a session reference, e.g. indication of the source of the data or a session ID, and the data itself. The database 2 contains input and output routing tables. When the input router 1 receives a message, it queries the database 2 using the session reference in the message and obtains in response the identity of one of the state machines 3a, 3b, 3c. At least the data in the message is then routed to the identified state machine 3a, 3b, 3c by the input router 1. The state of the identified state machine 3a, 3b, 3c may change in response to the data in the message and an output may be generated, if such is required by the new state. Such outputs comprise output control messages which include at least an output device ID and an output device command. The outputs from the state machines 3a, 3b, 3c are handled by the output router 4 which routes them to the appropriate output device, e.g. a display unit or an audio unit for sending audio via a mobile telephone.

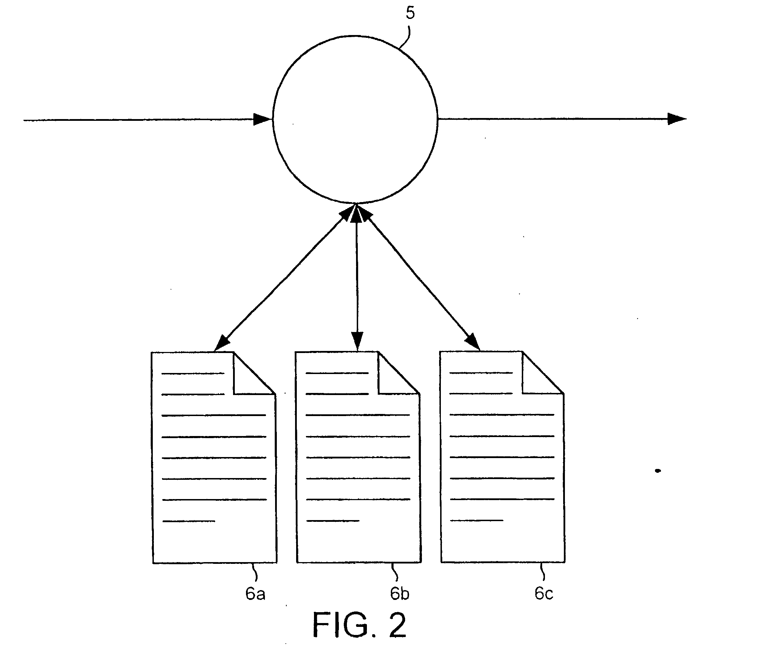

Referring to Figure 2, the state machines 3a, 3b, 3c and input router 1 may be embodied by a shared state machine process 5 and a plurality script files 6a, 6b, 6c each defining the operation of one "state machine". In this case, the functionality of the input router 1 resides in the selection of the correct script file 6a, 6b, 6c, in dependence on message source ID, by the shared state machine process 5.

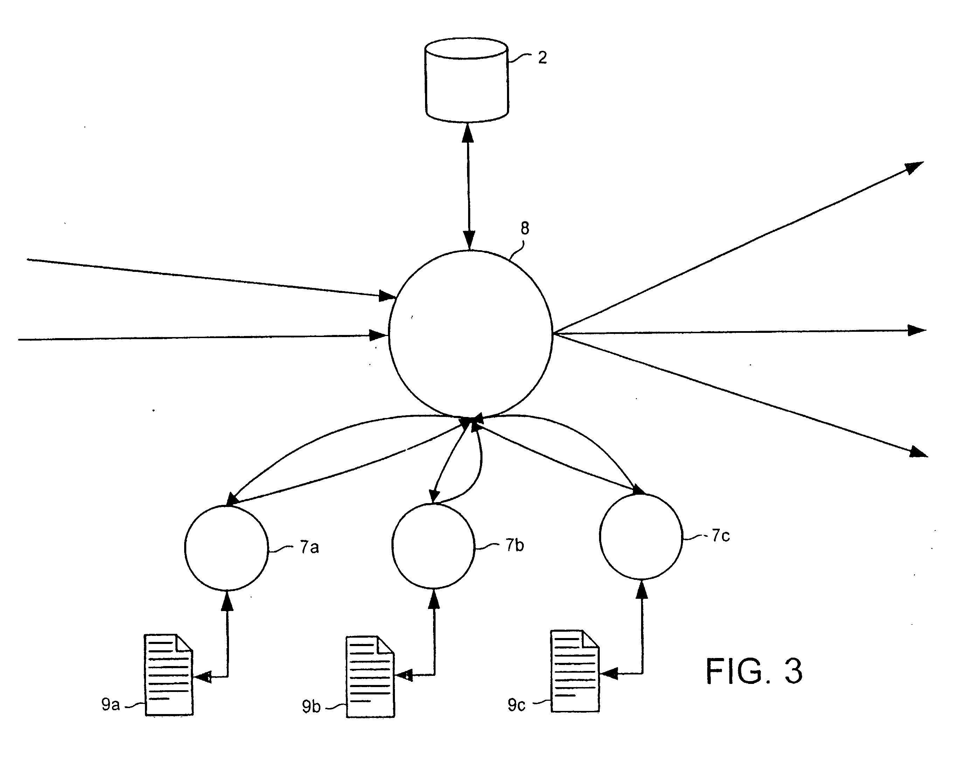

Referring to Figure 3, in another embodiment, the state machines 3a, 3b, 3c are implemented by instances of software objects 7a, 7b, 7c and the functions of the input and output routers 1, 4 are somewhat combined in a routing process 8. In this case, the routing process 8 invokes a method of the appropriate object 7a, 7b, 7c using the message data at least as a parameter. If the new state of the "state machine" requires an output, the invoked method returns at least an output device ID and output device command to the routing process 8 which then dispatches it as necessary.

The software objects 7a, 7b, 7c may be components which expose the same interface to the routing process 8. In this way, "state machines" can be added without the need to modify the program code for the routing process 8. Each software object 7a, 7b, 7c refers to a respective control file 9a, 9b, 9c for generating some control messages. The processing of "housekeeping" messages is handled in a standard manner by code defining the software objects in a standard manner. The control files 9a, 9b, 9c define the content and flow of the system as perceived by a user.

The control files 9a, 9b, 9c may have the following general structure:-

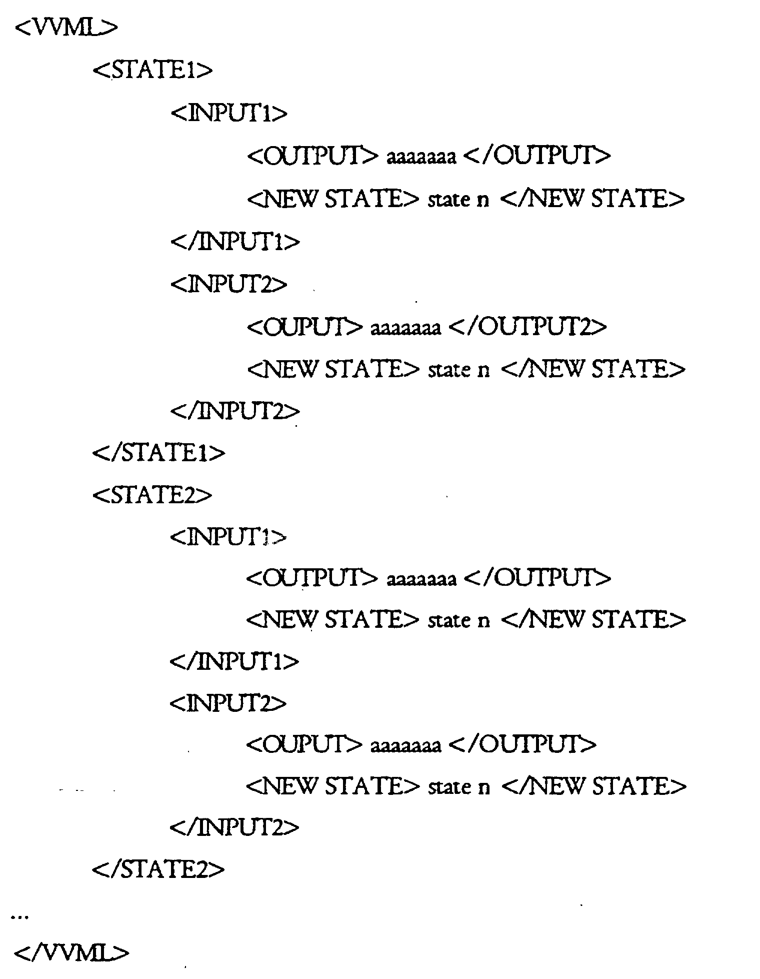

The input tags (<INPUT1>, </INPUT1> etc.) may comprise the various messages that can legitimately be received for the state to which they relate.

An authoring environment may be provided for generating the control files and bundling them with associated audio or video files for delivery to the server and the output devices. The authoring environment preferably provides a graphical user interface and enables definition of the states and the state changes by means of "drag and drop". The server may be operated by a server operator who sells resources on a server to third parties who provide the control and media files which they have prepared using the authoring environment. The transferring of the control and media files to the server may be an automated process involving transmission of the control and media files via the Internet or some other network.

The "state machines" may also take time or clock information as inputs and it may be necessary for the routing process 8 to poll the software objects 7a, 7b, 7c regularly to obtain output messages resulting from time based state changes.

A first system embodying the present invention will now be described.

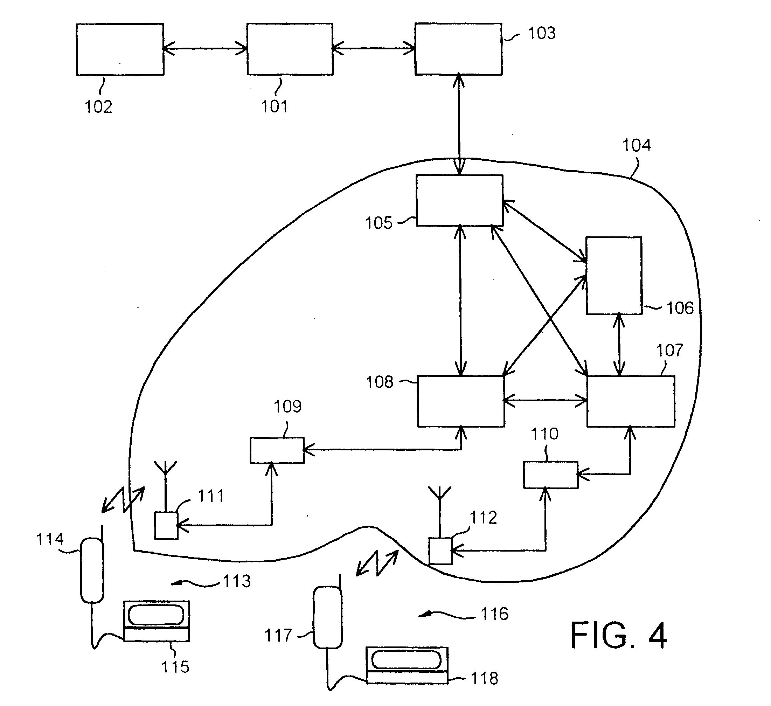

Referring to Figure 4, an information distribution system comprises a server 101, a control station 102 connected to the server 101 via the Internet, a short message service centre 103 connected to the server 101 by a leased line, and a GSM mobile telephone network 104. The GSM network 104 includes a short message service gateway 105, a home location register 106 and first and second mobile service switching centres 107, 108. The mobile service switching centres 107, 108 are connected respectively to first and second base station controllers 109, 110 (in practice each mobile service switching centre will usually be connected to a plurality of base station controllers). The base station controllers 109, 110 are connected respectively to first and second base transceiver stations 111, 112 (in practice each base station controller will usually be connected to a plurality of base transceiver stations). A first client 113 comprises a first mobile station 114 connected by a serial link to a first portable computer 115. The first client 113 is located in the cell covered by the first base transceiver station 109. A second client 116 comprises a second mobile station 117 connected by a serial link to a second portable computer 118. The second client is located in the cell covered by the second base transceiver station 112. In this example, the first and second mobile stations 114, 117 have built-in modems such as are found in the Ericsson SH888 and Nokia 8810. Conveniently, the portable computers 115, 118 will be handheld machines such as WindowsCE or Psion Series 5 machines. There may be a plurality of control stations 102, each dealing with one or more groups of users.

The routing of short message service messages is conventional and details can be obtained from Mouly, M et al., "The GSM system for Mobile Communications", ISBN 2- 9507190-0-7.

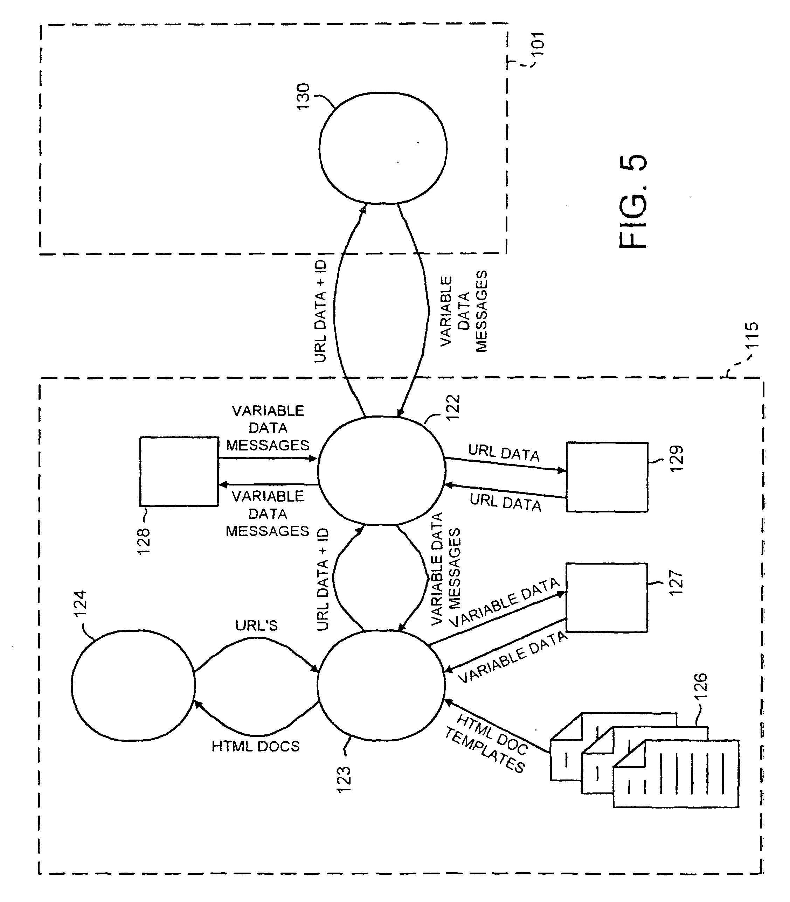

Referring to Figure 5, the first portable computer 115 supports a proxy server process 122, a protocol handler process 123 and a web browser 124. The proxy server process 122 runs whenever the computer 115 is on. However, the protocol handler process 123 will only be set running when its functions are required.

The protocol handler process 122 processes URLs submitted from the browser 124 and returns HTML pages to the browser 124. The HTML pages are created by the protocol handler process 123 by merging locally generated data, e.g. user name, and data, received from the server 101 in short message service messages, with HTML page templates.

The proxy server process 122 caches short message service messages from the server 101 which relate to the HTML page templates. These messages have a characteristic header in their user data portion. It also performs some local functions in response to submitted URLs, and generates and sends short message service messages to the server 101 using the first mobile station 114. The messages sent by the proxy server process 122 are generated on the basis of submitted URLs passed from the protocol handler process 123.

A short message service server process 130 sends short message service messages to the first client 115 in response to various events which will be described below. These messages contain variable data for HTML pages for which the user has templates 126. The raw short message service message contents are stored by the proxy server process 122 in a cache 128.

When a user submits a URL using the browser 124, the browser 124 determines whether it refers to a page of the present system from the presence or absence of a swim:// prefix, instead of, for example, the conventional http:// prefix. If the URL has the swim:// prefix, the protocol handler process 123 is started and the URL is passed to it.
"swim://" URLs comprise a page identifier and one or more name-value pairs. The name-value pairs may include data to be communicated to the server process 130 or stored locally, and directives for defining the handling of the URL by the protocol handler process 123 and the proxy server process 122.

If the URL includes a directive indicating that no variable data or only locally generated variable data is required, the protocol handler process 123 simply merges the identified HTML page template 126 with any identified locally generated variable data from a local data store 127 and returns the resulting HTML page to the browser 124.

If, however, the URL indicates that data from the server 101 is required, the protocol handler process 123 passes the URL (or at least that part of it as is required by the proxy server process 122) to the proxy server process 122 together with a message ID. If the URL does not require an *ad hoc* response from the server process 130, the proxy server process 122 transfers the contents of its message cache 128 to the protocol handler process 123.

In this case, the protocol handler process 123 analyses any messages received from the proxy server process 122 and updates the variable data in its local data store 127. The protocol handler process 123 then retrieves the variable data for the submitted URL from its local data store 127 and merges it with the relevant HTML page template. The resultant HTML page is then sent to the browser 124.

A proxy server directive is provided that causes data in a URL to be stored in the message cache 128 as a pseudo short message service message. This data will then be sent back to the protocol handler process 123 as if it had been received from the server process 130. In this way, the contents of the protocol handler process's data store 127 can be amended to include data input by the user and to update controls on the displayed page without the need to contact the server 101 and receive a reply therefrom.

If the URL data received by the proxy server process 122 indicates that the server 101 must be contacted, the proxy server process 122 builds a short message service message using the data elements of the URL and the message ID and then sends the message to the server process 130 using the mobile station 113 and the short message service of the network 105.

The structure and operation of the server 101 and the server process 130 will be described in detail below. However, if a response is not required from the server 101, the proxy server process 122 immediately sends the contents of its message cache 128 to the protocol handler process 123 which proceeds as described above.

On the other hand, if a response is required from the server process 130, the proxy server process 122 monitors incoming short message service messages until it receives a complete message bearing the ID of the message that it earlier sent to the server process 130. When this reply message has been received, the proxy server process 122 passes the contents of its message cache 128, which now include the reply message, to the protocol handler process 123 which processes the message cache data as described above and generates the new HTML page using the data returned by the server process 130.

In order to minimise short message service traffic, URL data can also be cached by the proxy server process 122 in a URL data cache 129 until a URL containing an explicit submit directive is received from the protocol handler process 123. This mechanism would typically be employed where a user needs to click several times on an HTML page to make a selection and then click on a submit button. In this case, the initial clicks would cause a sequence of URLs to be sent to the proxy server process 122 which each contain a cache directive and data. This data would then be stored in the URL data cache 129. Clicking on the submit button would cause a URL with a submit directive to be sent to the proxy server process 122 which would then build an short message service message using the cached data and send it to the server 101. A variant of this directive contains a count value and triggers a submit to server 101 when the number of received URL's, containing the directive and originating from the same HTML page, reaches the count value.

Since conditions at the server 101 may change with time and the server process 130 can send variable data to clients 113, 116 without a specific request being made, it is desirable that the browser 124 resubmits the current URL at intervals so that the displayed page remains up to date.

The second client 116 is similarly configured and interacts with the server in the same manner.

The foregoing gives an overview of the functionality of an example of a client according to the present invention. Generally, the directives need to be defined when the protocol handler process 123 and the proxy server process 122 are being designed. However, the data elements will be defined when the HTML page is being designed.

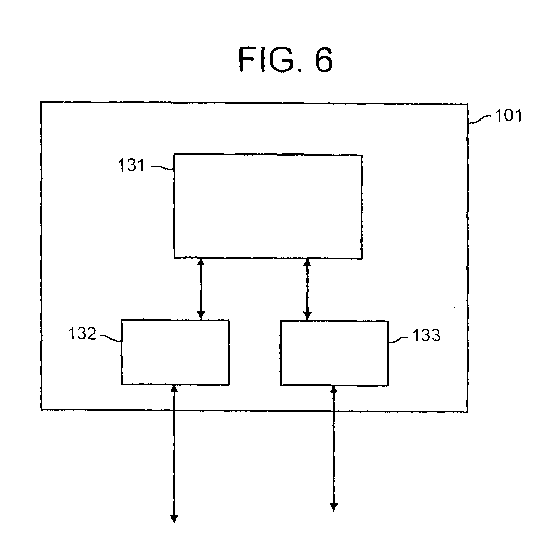

Referring to Figure 6, the server 101 comprises a processor 131 including a CPU, ROM, RAM and disk drives, an Internet interface 132 and an short message service interface 133. The server 101 is implemented using a Sun Sparc machine.

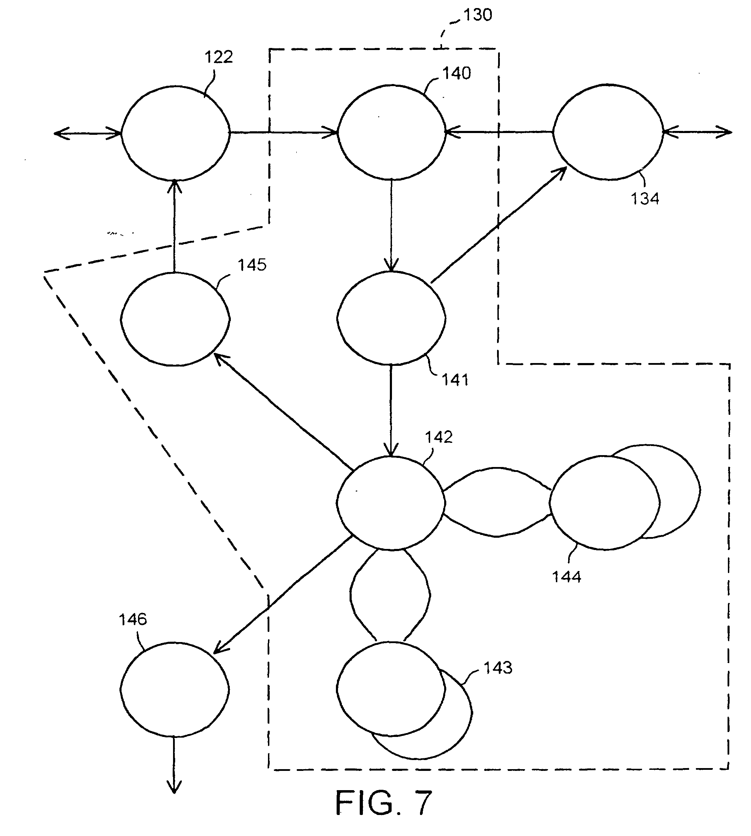

Referring to Figure 7, a web server 134 and the short message service server process 130 are implemented as processes on server 101. The web server 134 is provided so that the short message service server 135 can be controlled from a web browser over an Internet connection. The short message service server 130 is implemented using an object-oriented database system.

Each user of the system is represented by an instance of a user class and includes, *inter alia,* the user's mobile telephone number. Users are members of one or more groups represented by instances of a group class which hold a list of the HTML pages available to the members of the group. A group may contain only one user.

The groups may be employees of the same company, a group of friends, or some other collection of people with an interest in common. A user may permit his details, stored in the database, to be available to other users. This makes it possible for users to create new groups by inviting other members to join. For instance, a user with an interest in surfing might want to set up a service providing information about surf conditions at different beaches. To do this he would design the necessary HTML pages and control objects, i.e. "state machines". The control objects would be uploaded to the server 101. The user could then send e-mails to other users inviting them to join the new group and then e-mail the HTML pages to those who responded positively. Of course, if a service is already established, it would only be necessary to send the HTML pages to new members of the group for the service. The mode of distribution of the HTML pages is not important, e-mail being given as an example only. Another method of distribution would be to include suitable HTML pages in the free disk on the cover of a computing magazine. These pages would include the HTML pages for the service and a special HTML page for registering for the service with the server 101.

Each page that can be displayed by a client 113, 116 of the system has associated with it a class. The class defines the properties of the page needed by the server 101 and the logic associated with pages of that type in the form of methods. For each page class, there is a respective class handler object instance.

When a short message service message is received from the proxy server process 122 of a client 113, 116, it is passes to a routing object instance 140. The routing object instance 140 identifies the type of page to which the message relates and routes it to the class handler object instance 141 for that type of page. The routing object instance 140 and the class handler object instance 141 provide here the functionality of the input router 1 in Figure 1. The message contains the identity of the user sending the message and, using this information which in combination with the URL identifies the transaction, the class handler object instance 141 searches through a linked list of instances of objects 142 of the class representing the page for an instance including the user as its or one of its owners.

If an page object instance 142 belonging to the user is not found, the class handler object 141 generally instantiates a new page object instance 142. However, messages not requiring the instantiation of the new page object instance 142 are permitted. If an new instance is instantiated, the page object's constructor will instantiate one or more page representation object instances 143. The page representation object instances 143 store the state of the page as presented to the or each user. In some cases, the same page representation object instance 143 will apply to all of the owners and, in other cases, each user will be seeing a different display and, accordingly, respective page representation object instances 143 are required. Page object instances 142 may also have access to the user objects 144 for their owners so that their operation can be tailored according to their owners' preferences.

Once the page object instance 142 has been instantiated, or has been found in the search by the page handler object instance 141, it is passed the message which it then processes to produce an output. The output will usually be a variable data (i.e. output command) to be sent back to the client 113, 116 that initiated the processing or to be sent to another client 113, 116 whose user belongs to the same group. In these cases, the variable data is passed to a short message service message output process 145 (i.e. the output router 4 of Figure 1) which constructs short message service messages to convey the variable data to its destination. However, the output could be to many other destinations 146, e.g. a telephony switch for providing conference call facilities to the owners of the page class object instance 142, or the web server 134 for reporting to a group supervisor.

The short message service server 130 does not only respond to short message service messages from clients 113, 116. An update of variable data for a page may be received from the control station 102 via the web server 134. Such a message takes the form of the identity of the page, the group to which the update relates and the update itself. The message is passed to the routing object instance 140. The routing object instance 140 identifies the type of page to which the message relates and routes it to the class handler object instance 141 for that type of page. The message contains the identity of the page's user through the group identification and, using this information, the class handler object instance 140 searches through a linked list of instances of page objects 142 for an instance including the users of that group as its owners.

If a page object instance 142 belonging to the group is not found, the class handler object 141 instantiates a new page object instance 142. The page object's constructor will instantiate one or more page representation object instances 143 as necessary.

Once the page object instance 142 has been instantiated, or has been found in the search by the page handler object instance 141, it is passed the update message. The page object instance 142 then outputs the updated variable data in the appropriate name-value pairs to the short message service message output process 145 with instructions to send it to each member of the group. The short message service message output process 145 then sends the necessary messages to the group members so that the updated variable data is available next time a user selects the URL for the page or the page is refreshed.

The page object instances 142 will be destroyed when their persistence is no longer required.

A registration HTML page may be made available, this would be treated at the server 101 as described above but the new user would be treated by default as a member of a global group of users. The page object instance 142 would create a new user record in the database in response to the new user supplying personal information, e.g. name, mobile telephone number, e-mail address and credit card details, using the registration HTML page.

Examples of applications of the present embodiment will now be described.

The first example is a financial ticker tape service.

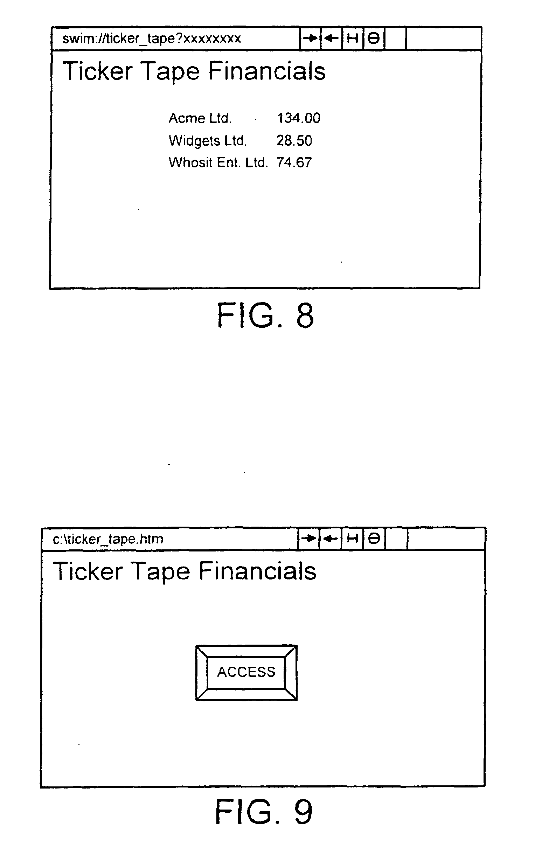

A user will have a template 126 for the HTML page shown in Figure 8 stored in his client 113, 116. It can be seen that the page has a plurality of rows, each having the name of a company and the price of one ordinary share. All of the information on the page is unchanging save for the prices themselves. The template 126 will therefore have all of the text, except the prices, and formatting codes. The positions of the prices are held by respective place holders in the template 126.

The provider of the service has access to the server 101 via the web server 134 and can use this to add new users to the ticker tape service subscribers group. The ticker tape data is generated automatically by the service provider and supplied at regular intervals to the server 1 via the web server 134.

A process at the web server 134 passes this data to the router object 140 which routes it to the page handler object instance 141 for the ticker tape service page. In this case, the page handler object instance 141 will instantiate an instance 142 of the ticker tape page object and then pass the data from the service provider. The ticker tape page object instance 142 outputs the data as name-value pairs to the short message service output process 145 together with the mobile telephone numbers of the subscribers from the user objects 144. The short message service output process 145 then constructs and transmits short message service messages bearing the prices to the client 113,116. It should be noted that a page representation object instance 143 is not required in this case.

Once the data has been sent to the short message service output process 145, the ticker tape page class object instance is destroyed.

The clients 113, 116 terminals of the subscribers to the ticker tape service will therefore receive short message service messages containing the prices. At each client 113, 116, these messages are cached by the proxy server process 122.

The URL for the ticker tape service page is rather complex for a user to conveniently type in. Therefore, a ticker tape service access page is provided (see Figure 9) . This page is a conventional HTML page stored locally. As can be seen, the page includes a button for accessing the ticker tape service. When the user clicks on this button, the swim:// URL for the ticker tape service page is submitted. This URL is processed by the protocol handler process 123 and the proxy server process 122. The proxy server process 122 is caused to send the cached messages to the protocol handler process 123 which stores the latest version of the price data in its data store 128. The latest price data is read from the data store 128 by the protocol handler process 123 and merged into the HTML template for the ticker tape service page. The resultant document is then sent to the browser 124 and displayed.

If the user does not close the browser 124 or submit another URL, the browser 124 will resubmit the URL for the ticker tape page after a predetermined period has elapsed so that the page will be refreshed with the latest prices.

The second example is the processing of a move in a chess game played between the users of the first and second clients 113,116.

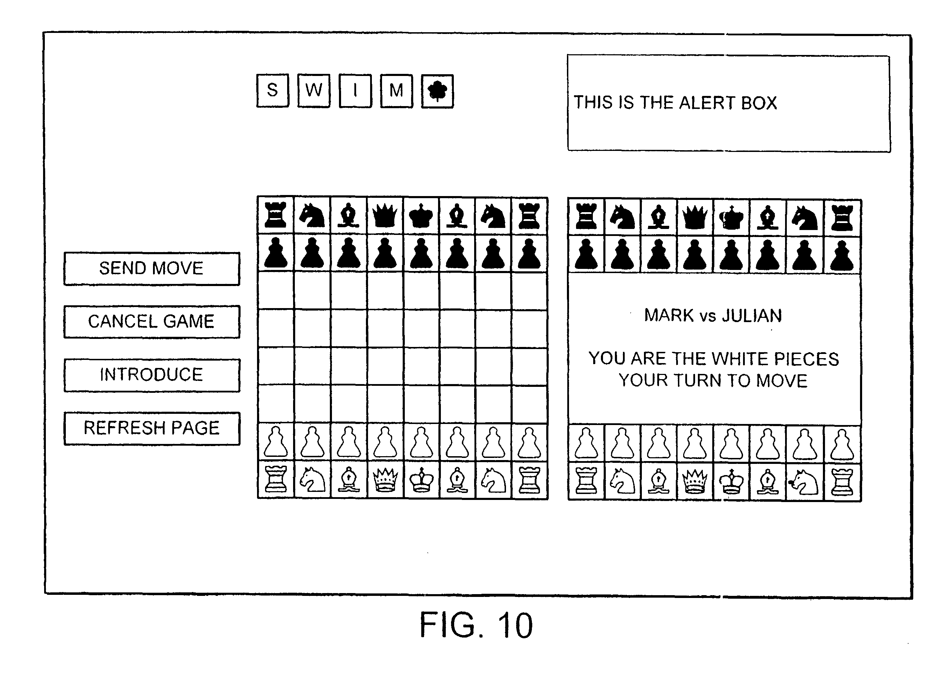

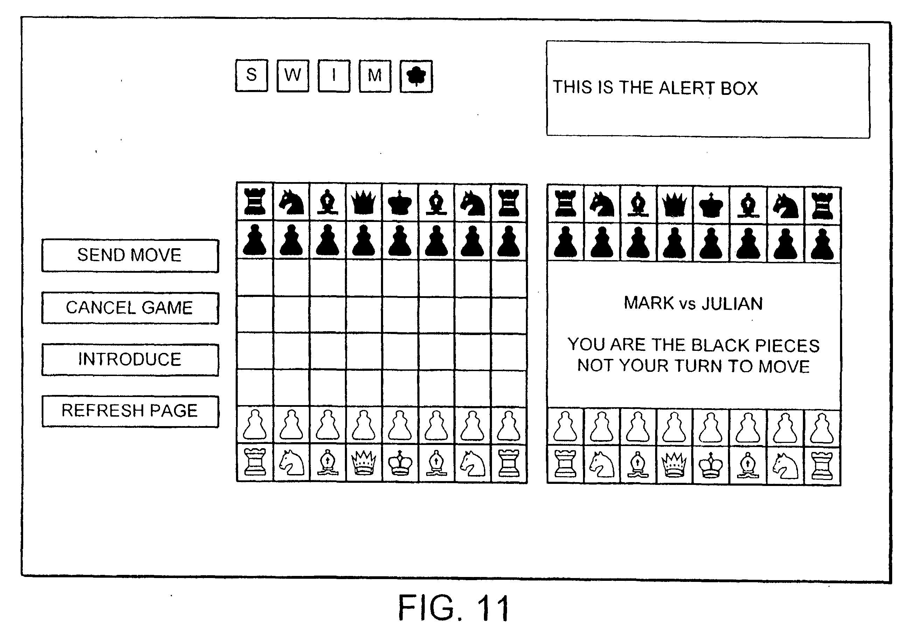

The first client 113 is displaying to the page shown in Figure 10 and the second client is displaying the page shown in Figure 11. It can be seen that there are differences between the displayed pages. First and second users are using respectively the first and second clients 113, 116.

At the server 101, an instance of a chess game page object 142 has been instantiated. This object instance 142 embodies the rules of chess and logic for controlling the pages displayed to the users. Since these pages are different, the chess game object 142 maintains two page representations 143, one for each player. Both page representations 143 record the positions of the pieces.

When the first user wishes to move a piece, he first clicks on the bitmap representing the square holding the piece to be moved. The browser 124 responds by generating a URL which it submits to the protocol handler process 123. The URL identifies the page, a location for a "highlighted" bitmap to replace the one clicked on and the identity of the chessboard square represented by the clicked-on bitmap. The URL also contains a directive that causes the location for a "highlighted" bitmap to be stored as a pseudo message in the proxy server's message cache 128 and a directive that causes the chessboard square identity to be stored in the proxy server's URL cache 129. This second directive has associated with it a count value, in this case two.

After receiving the URL data, the proxy server process 122 sends the contents of its message cache 128 to the protocol handler process 123. The protocol handler process 123 will then merge the chess game page template with the updated data, which includes the new bitmap location for the clicked-on square, and sends the new page to the browser 124. Consequently, the user is provided with a visual indication of the square on which he clicked.

The first user now clicks on the square to which he wants to move the selected piece. A second URL, which is the same as the first except for the identified square, is generated and sent to the proxy server process 122 via the protocol handler process 123. The bitmap location data is treated as in the first case. However, the caching directive is the same with the same count value, i.e. two. The proxy server process 122 detects that two such directives have now been received and builds an short message service message including the identities of the squares clicked-on by the user and a message ID from the protocol handler process 123. This message is then sent to the server 101.

At the server 101, the message is routed to the chess page object instance 142 for the game. This object instance 142 checks that the proposed move is legal by referring to one of the page representations 143. If the move is illegal, the object instance 142 sends a message back to the first user which causes a message page to be displayed with the text "Error: illegal move" and a link that when selected will cause the chess page to be displayed again.

If the move is legal, the object instance 142 checks for a checkmate condition. The object instance 142 then updates the page representations with the new piece position, swaps "your move" and "opponent's move" text and, if necessary, adds "checkmate - game over". Messages for the users, reflecting the changes to their respective page representations, are then constructed and sent to the users.

When the first user receives his message, the proxy server process 122 of the first client 113 caches it until the next refresh is requested by its browser 124, at which point it transfers the contents of its message cache 128 to the protocol handler process 123. The protocol handler process 123 then creates an updated HTML page and sends it to the browser 124 so that the user sees the chess pieces in their new positions, the legend "opponent's move" and, if appropriate, "checkmate - game over".

The message received by the second user is similarly processed by the second client 116. However, the page displayed to the second user will bear the legend "your move", assuming that the last move by the first player did not end the game.

In the foregoing description, the server 101 is connected to the short message service centre 103 by a leased line. However, the server 101 may use a mobile station to send messages for clients via the short message service.

In a passive embodiment, a client according to the present invention is configured to merge cell broadcast short message service messages in to HTML pages so that these messages can be conveniently viewed using a browser.

A second system embodying the present invention will now be described.

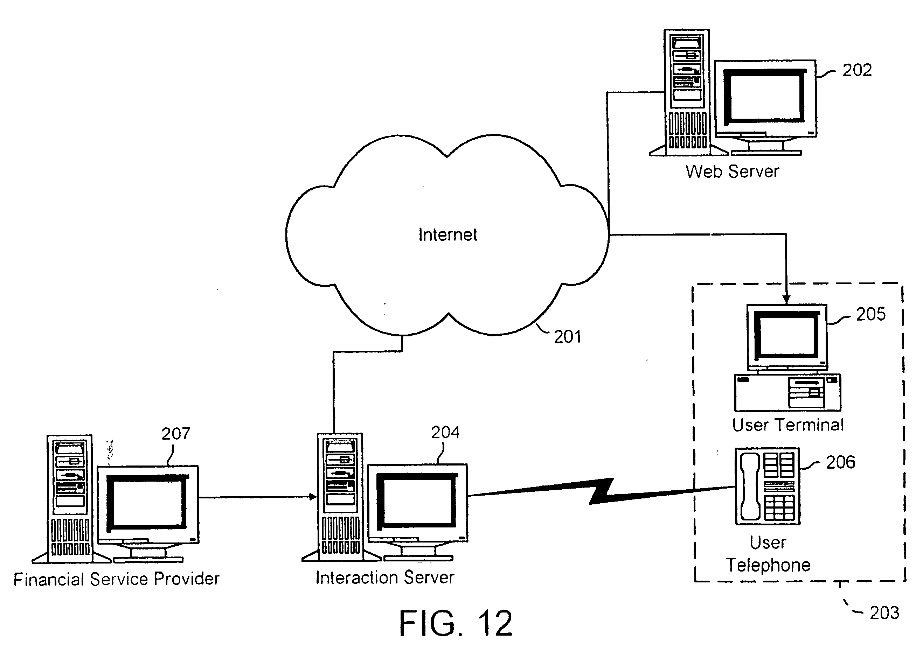

Referring to Figure 12, an e-commerce system makes use of the Internet 201. Connected to the Internet 201 are a vendor site 202, a user site 203 and a server site 204. The vendor site 202 includes a web server. The user site 202 comprises a personal computer 205 and a telephone 206 which may be a pstn or a plmn terminal. The telephone 206 can be used to call the server site 204 via the pstn and/or a plmn. The server site 204 is also connected to a financial service site 207. The financial service site 207 belongs to a financial services provider that guarantees funds for transactions between the user and the vendor.

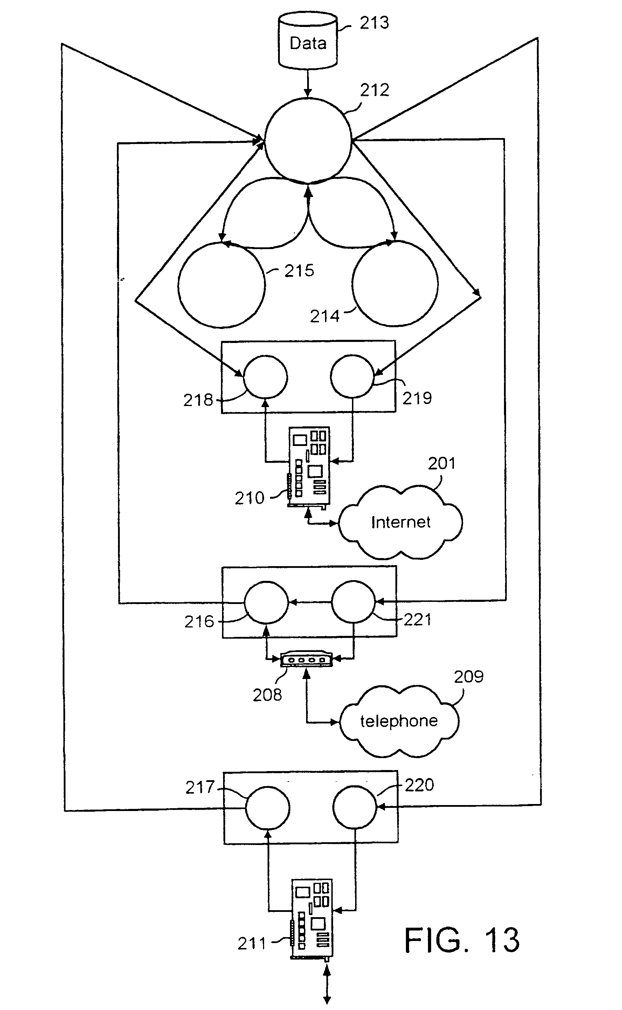

Referring to Figure 13, the server site 204 comprises a multi-line digital telephone interface 208, including speech synthesisers, for interfacing it with a telephone network 209, an Internet interface 210 and a communication interface 211 for providing a connection to the financial service site 207. Additionally, the server site 204 supports a routing process 212, a database 213, a transaction-specific state machine control object instance 214, a general control state machine object instance 215, a telephone input process 216, communications input process 217, an Internet input process 218, an Internet output process 219, a communication output process 220 and a telephone output process 221. The database 213 includes *inter alia* a table containing the details of registered users, including respective PINs and telephone and account numbers.

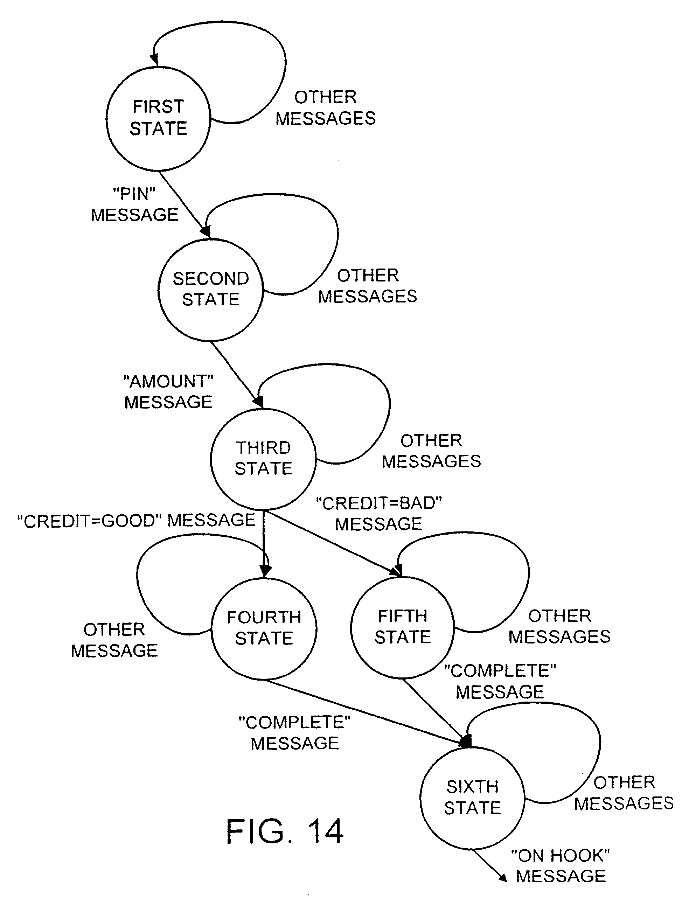

A transaction using the system shown in Figures 12 and 13 will now be described with reference to Figure 14 also.

In the following description, messages routed via the routing process 212 comprise a routing part and a data part.

A vendor advertises goods or services using web pages provided by the web server at the vendor site 202. A transaction page generated by the vendor site includes a Java applet which enables the displayed content of the page to be changed without a user resubmitting the page's URL. The transaction page also includes a unique transaction code generated when a user submits the page's URL. The code comprises a vendor code portion and a varying transaction code portion.

When a user of the user site 203 wishes to make a purchase, the user will, for example, fill a "shopping basket" with virtual items and submit the URL of the vendor's transaction page, usually by clicking on a link When the transaction page has been displayed on the user's personal computer 205, the user dials the telephone number displayed using the telephone 206. The call is answered by the digital telephone interface 208 and the telephone input process 216. An initialisation routine of the telephone input process 216 obtains the user's telephone number using CLI and stores it locally together with a unique reserved temporary transaction ID and an ID for the telephone line on which the call was received.

The telephone input process 216 then sends an initialisation message to the routing process 212. The initialisation message comprises the temporary transaction ID in the routing part and "source=telephone" in the data portion.

An input routing table of the database 213 is used to map transaction IDs onto control object IDs. The reserved temporary transaction IDs are all mapped onto the ID of a general control object instance 215.

The routing process 212 accesses the input routing table entry for the transaction ID and obtains the ID of the general control object instance 220. The routing process 212 invokes a method of the general control object instance 220, passing the message as a parameter.

An output routing table has three columns comprising: transaction ID, destination, output process ID.

This method creates or edits a record in the output routing table for the temporary transaction ID setting the destination field to "telephone" and the output process ID to the ID of the telephone output process 221. The method returns a message comprising the temporary transaction ID and "telephone" in the routing part and a "send code input request" command in the data part to the routing process 212. The routing process 212 then accesses the output routing table entry for the temporary transaction ID where destination= "telephone" and retrieves the output process ID which in this case is the telephone output process 221. The routing process 212 then sends the message to the telephone output process 221.

The telephone output process 219 responds to the "send code input request" message by finding the ID of the telephone line using the temporary transaction code in the message and connecting the output of a speech synthesiser to the identified telephone line and instructs the speech synthesiser to output a speech message requesting the user to input the code displayed on the web page.

The user responds to the speech message by entering the displayed code using the buttons on the telephone 206. The telephone input process 216 detects the DTMF signals from the telephone 206 and constructs a message comprising the temporary transaction ID and the entered code. This message is then sent to the routing process 212.

When the routing process 212 receives the message containing the entered code, it again accesses the input routing table record for the temporary transaction ID and obtains the ID of the general control object instance 215. Therefore, the routing process 212 again invokes the method of the general control object instance 215.

The method extracts the vendor part of the entered transaction ID and instantiates an instance 214 of the corresponding control object for that vendor, setting it in a first state, and creates a new entry in the input routing table mapping the entered transaction ID onto the ID of the new instance 214 of the transaction-specific control object. The method then adds the following rows to the output routing table:
transaction ID, "telephone", telephone output process ID
transaction ID; "vendor", internet output process ID
transaction ID; "financial", communications output process ID

The control objects may be arranged in a list so that they can be accessed by reference to their position in the list. In this case, the ID is the position of the instance in the list. This will of course may have to be updated when a control object is destroyed and resetting of transaction IDs should be a common feature of the destructors of control objects.

The method of the general control object instance 215 then returns a "substitute message" comprising the temporary transaction ID and "telephone" in the routing part and "substirute=[entered transaction ID]" in the data part. The routing process 212 routes this message to the telephone output process 221 according to the relevant entry for the temporary transaction ID in the output routing table.

When the telephone output process 221 receives the message, it replaces the temporary transaction ID, stored by the telephone input process 216, with the entered transaction ID and then instructs the telephone input process 216 to send an "initial" message to the routing process 212. The "initial" message comprises the transaction ID and no data.

The routing process 212 then looks up the control object ID for the transaction ID in the input routing table and this time obtains the ID of the new instance 214. The routing process 212 uses this ID to invoke a message handling method of the control object instance 214.

Since the control object instance 214 is in the first state at this point, the invoked method then generates a message for the telephone output process 221 comprising the transaction ID and "telephone" in the routing part and a "send PIN request" command in the data part. This message is returned to the routing process 212 and the control object instance 214 enters a second state.

The routing process 212 obtains the output process ID, i.e. that of the telephone output process 221, for the combination of transaction ID and "telephone" from the output routing table and sends the message to the telephone output process 221. The telephone output process 221 responds to the "send PIN request" message by connecting the output of a speech synthesiser to the telephone line to the user's telephone 206 and instructs the speech synthesiser to output a speech message requesting the user to input his PIN.

The user responds to the speech message by entering his PIN using the buttons on the telephone 206. The telephone input process 216 detects the DTMF signals from the telephone 206 and constructs a message comprising the transaction ID in the routing part and "pin=[entered PIN] number=[user's telephone number]" in the data part. This message is then sent to the routing process 212.

On receiving the PIN message, the routing process 212 obtains the ID for the control object instance 214 from the routing table and invokes the message handling method of the control object instance 214. The invoked method parses the data part of the message and determines that the PIN has been entered and also that it is itself in the second state. The method therefore looks up the user's telephone number in the database table of registered users and compares the PIN in the located record, if such exists, with the entered PIN.

If the PINs match, the method generates a message for the vendor site 202. This message has the transaction ID and "vendor" in the routing part and "recognised=[name]" in the data part. This message is then returned to the routing process 212 and the control object instance 214 enters a third state.

The routing process 212 obtains the ID of the Internet output process 219 from the routing table for the transaction ID and "vendor" combination. The routing process 212 then forwards the message to the Internet output process 219 which sends the message to the vendor site 202 using its own routing table mapping the vendor code part of the transaction ID to IP address.

When the vendor site 202 receives the message, it uses the Java applet to change the web page displayed to the user, identified by the transaction code, to include the message "Your order is being processed [name]" where [name] is the name of the user received in the message. Once this change has been effected, the vendor site 202 sends a message back to the server 204. This message comprises the transaction ID in the routing part and "amount=[cost]" in the data part.

The "amount" message is received by the Internet input process 218 and passed on to the routing process 212. The routing process 212 obtains the ID of the relevant control object instance 214 from the input routing table and invokes the message handling method of the control object instance 214.

The message handling method parses the incoming message and determines that it is an "amount" message and also that it is itself in the third state. In dependence on the contents of the message and the current state, the method generates a credit check message for the financial service site 207. This message comprises the transaction ID and "financial" in the routing part and "account=[account number from user database] amount=[amount from vendor]" in the data part..

The credit check message is routed by the routing process 212 to the financial service site 207 via the communications output process 220. The financial service site 207 determines whether the transaction should proceed and generates an appropriate message for the server 204. If the transaction is to proceed, the financial service site 207 logs the transaction code, the account number and the amount for later reconciliation and generates a message comprising the transaction ID in the routing part and "credit=good" in the data part.

The message is passed, via the communications input process 217, to the routing process 212 which then invokes the message handling method of the control object instance 214. The method responds to this message by generating a "transaction confirmed" message which is returned to the routing process 212 and sent on to the vendor site 202 as described above and enters a fourth state. The vendor site 202 responds by displaying a transaction complete message on the transaction web page, including an instruction to hang up, using the Java applet and sending a "complete" message back to the server 204.

If the transaction is not to proceed, the financial service site 207 generates a message comprising transaction ID in the routing part and "credit=bad" in the data part.

The message is passed to the routing process 214 which then invokes the message handling method of the control object instance 214. The method responds to this message by generating a transaction not confirmed message which is returned to the routing process 212 and sent on to the vendor site 202 and enters a fifth state. The vendor site 202 responds by displaying a transaction rejected message on the transaction web page, including an instruction to hang up and contact the owner of the financial service server 207, using the Java applet and sending a "complete" message back to the server 204.

The "complete" complete message is routed as described above to the message handling method of the control object instance 214. The method then generates a terminate message for the telephone output process 221, in this case irrespective of whether it is in the fourth or fifth state, and enters a sixth state. This message is returned to the routing process 212 and sent to the telephone output process 221. The telephone output process 221 responds by causing the digital telephone interface 208 to hang up, instructing the telephone input process 216 to send an "on hook" message to the routing process 212 and deletes the local record of the transaction ID and associated data.

The "on hook" message is routed to the control object instance 214 which responds by executing a destructor method. The destructor method deletes the entries in the routing tables for the associated transaction ID and resets the control object instance IDs for those control objects below itself in the list of control object instances.

Referring particularly to Figure 14, messages that are not as described above, both in content and timing, are ignored and do not affect the state of the control object instance 214.

If the financial site 207 or the server site 204 is operated by or in association with the user's telephone company, the user's purchases may be shown on the user's telephone bill so that the user can pay for them when paying his telephone bill.

It will be appreciated that the foregoing is an abbreviated system and that much more complex sets of states and state transitions could be employed, including exception handling. It can also be seen that the control objects can be tailored individually to the vendor sites included in the system. For instance, the commands sent to the vendor site may need to differ because of different software at different vendor sites.

While the foregoing system has been described with reference to one active session specific control object instance, it will be appreciated that the routing tables mean that a plurality of instances of such control objects of the same or different type can be concurrently supported thereby providing for simultaneous transactions.

In a variant system, a vendor provides transaction page in the form of an HTML form. When a user of the user site 203 wishes to make a purchase, the user will, for example, fill a "shopping basket" with virtual items and submit the URL of the vendor's transaction page, usually by clicking on a link. The transaction page includes user name and password text boxes and the user will fill these in using his computer's keyboard and then click on a submit button on the transaction page. A CGI program generates an initialisation message for the server 204 in response to the submitted action URL. This message contains a code, comprising a unique transaction ID in the routing part and "source=vendor" in the data part, and is sent to the server 204 via the Internet 201.

The Internet input process 218 receives the message from the vendor site 202 and forwards it to the routing process 212.

The routing process 212 accesses the input routing table and will not find an entry for the transaction ID. In default it therefore determines that it should use the ID of the general control object instance 220 for routing the message. The routing process 212 invokes a method of the general control object instance 220, passing the message as a parameter.

This method creates a record in the output routing table for the transaction ID setting the destination field to "vendor" and the output process ID to the ID of the Internet output process 219. The method also extracts the vendor part of the entered transaction ID and instantiates an instance 214 of the corresponding control object for that vendor, setting it in a first state, and creates a new entry in the input routing table mapping the entered transaction ID onto the ID of the new instance 214 of the transaction-specific control object. The method then adds the following rows to the output routing table:
transaction ID; "vendor", internet output process ID
transaction ID; "financial", communications output process ID
   The control objects may be arranged in a list so that they can be accessed by reference to their position in the list. In this case, the ID is the position of the instance in the list. This will of course may have to be updated when a control object is destroyed and resetting of transaction IDs should be a common feature of the destructors of control objects.

The method of the general control object instance 215 then returns a send details message comprising the transaction ID and "vendor" in the routing part and a "send details" command in the data part. This message is returned to the routing process 212.

The routing process 212 obtains the output process ID, i.e. that of the Internet output process 219, for the combination of transaction ID and "vendor" from the output routing table and sends the message to the Internet output process 219 which sends it to the vendor site 202.

The CGI program responds to the "send details" message by generating a message comprising the transaction ID in the routing part and "user=[user name] password=[password] amount=[amount] in the data part. This method is then sent to the routing process 212 at the server 204.

On receiving the "details" message, the routing process 212 obtains the ID for the control object instance 214 from the routing table and invokes the message handling method of the control object instance 214. The invoked method parses the data part of the message and determines that the details have been received and also that it is itself in the first state. The user name and password using a database table of registered users.

If the user name and password match a record in the registered user database, the method generates a credit check message for the financial service site 207. This message comprises the transaction ID and "financial" in the routing part and "account=[account number from user database] amount=[amount from vendor]" in the data part..

The credit check message is routed by the routing process 212 to the financial service site 207 via the communications output process 220. The financial service site 207 determines whether the transaction should proceed and generates an appropriate message for the server 204. If the transaction is to proceed, the financial service site 207 logs the transaction code, the account number and the amount for later reconciliation and generates a message comprising the transaction ID in the routing part and "credit=good" in the data part.

The message is passed, via the communications input process 217, to the routing process 212 which then invokes the message handling method of the control object instance 214. The method responds to this message by generating a "transaction confirmed" message which is returned to the routing process 212 and sent on to the vendor site 202 as described above and enters a third state. The vendor site 202 responds by displaying a transaction successfully complete page and sending a "complete" message back to the server 204.

If the transaction is not to proceed, the financial service site 207 generates a message comprising transaction ID in the routing part and "credit=bad" in the data part.

The message is passed to the routing process 214 which then invokes the message handling method of the control object instance 214. The method responds to this message by generating a transaction not confirmed message which is returned to the routing process 212 and sent on to the vendor site 202 and enters a fourth state. The vendor site 202 responds by displaying a transaction rejected page, including an instruction to contact the owner of the financial service server 207, and sending a "complete" message back to the server 204.

The "complete" complete message is routed as described above to the message handling method of the control object instance 214. The control object instance 214 responds by executing a destructor method. The destructor method deletes the entries in the routing tables for the associated transaction ID and resets the control object instance IDs for those control objects below itself in the list of control object instances.

A third system embodying the present invention will now be described.

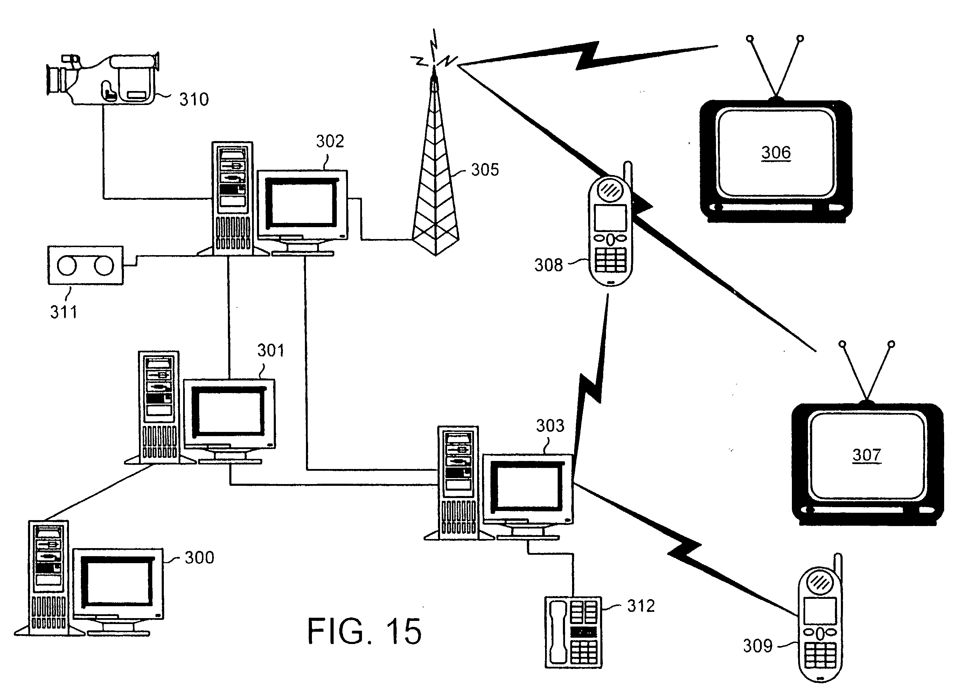

Referring to Figure 15, an interactive television system comprises a master station 300, a server 301 connected to the master station 300, a television processor 302 and a communications processor 303. The television processor 302 and the communications processor 303 are connected to the server 301 for the exchange of messages therewith. An audio signal path is provided between the television processor 302 and the communications processor 303. The system also includes a television transmitter 305 for transmitting television signals generated by the television processor 302, first and second televisions 306, 307 for receiving the television signal transmitted by the transmitter 305, and first and second digital mobile telephones 308, 309 near the first and second televisions 306, 307 respectively.

The television processor 302 is connected to receive signals from a video camera 310 and a video tape 311. The television processor 302 can also generated graphical and text images under program control.

The communications processor 303 can engage in a plurality of telephone calls, e.g. with the mobile telephones 308, 309, simultaneously and is connected to bank of telephony terminals 312.

The server 301 is generally responsive to signals from the communications processor 303 to send command signals to the television processor 302 and back to the communications processor 303.

The master station 300 is used to control the server 301, e.g. initialising its operation, and for sending control files, defining the server's operation, to the server 301.

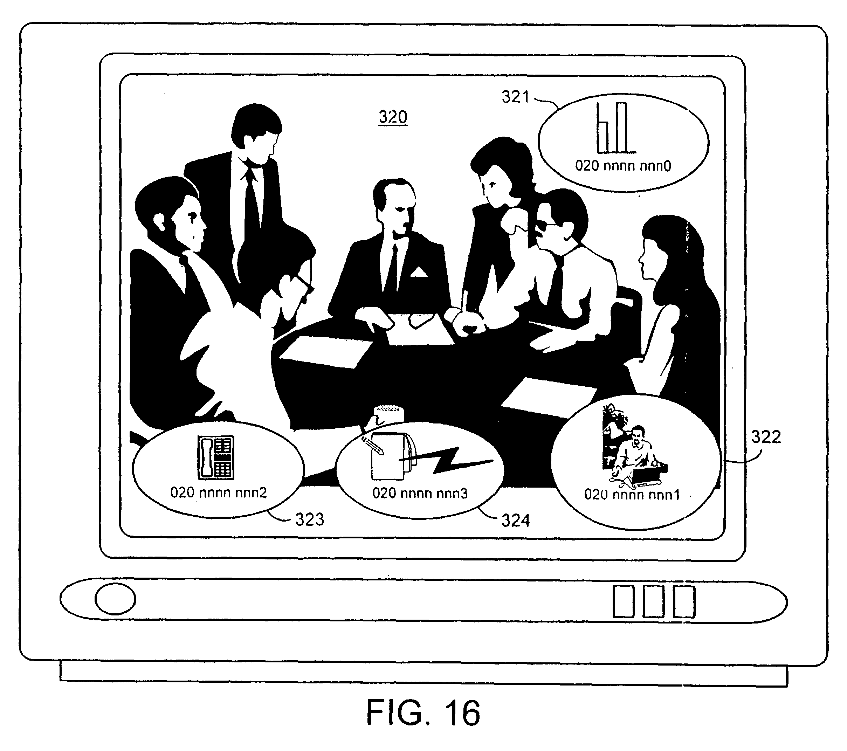

Referring to Figure 16, a television picture produced by the television processor 302 is for a discussion program and comprises a main image 320 showing a discussion group, obtained from the tape 311, and first, second, third and fourth overlays 321, 322, 323, 324. The first overlay 321 includes a graph illustrating yes and no votes made by the public in response to the discussion and a first telephone number. The second overlay 322 contains a video image of an expert, filmed using the video camera 310, giving a commentary on the discussion taking place in the main image and a second telephone number. The third overlay 323 contains the image of a telephone and third telephone number. The image of a telephone is an invitation to viewers to call a "helpline" related to the subject of the discussion. The fourth overlay 324 contains an image of a notepad and a communication "flash" and a fourth telephone number. The image in the fourth overlay 324 is an invitation to viewers to request additional information.

When the television programme shown in Figure 16 is to be transmitted, an operator sends a initialisation signal to the server 301 from the master station 300. The server 301 responds by instantiating state machine control object instances associated with each of the overlays 321, 322, 323, 324.

The operation of the present embodiment in respect of the first overlay 321 will now be described.

When a viewer dials the first number using his telephone 308, 309, the call is answered by the communications processor 303. The communications processor 303 then generates a message comprising a voting "function ID" in a routing part and "new call=[channel no.]" in a data part. The channel number identifies a logical channel that the communications processor 303 can use to send signals to the new caller. The message is then sent to the server 301.

The message is received by a routing process at the server 301 which obtains the ID of the control object instance for the first overlay 321 from an input routing table, set up using the master station 301, using the routing part of the message. The routing process then invokes a message handling method of the appropriate control object instance. The method responds to the message by generating a "play invitation" message comprising the function ID and "comms" in the routing part and "[channel no.] = play invitation" in the data part. This message is returned to the routing process which sends it to the communications processor 303 after looking up the destination in an output routing table, set up using the master station, using the routing part of the message.

When the communications processor 303 receives the message it responds by playing an audio file, telling the caller to press " 1" for yes and "0" for no, via the logical channel specified in the message. The communications processor 303 then waits for a digit to be input. When a "1" or a "0" has been entered by the caller, the communications processor 303 hangs up and generates a "vote" message comprising the function ID in the routing part and "vote= [yes/no]" in the data part.

The "vote" message is routed to the appropriate control object instance which responds by updating a local record of yes or no votes as necessary and incrementing a count of votes. If the count of votes equals a predetermined number, the percentage of yes votes is calculated and the count reset to zero. A message, comprising the function ID and "video" in the routing part and "percentage = [percentage]" in the data part, is then returned to the routing process and sent to the television processor 302. If the count has not reached the predetermined number, an empty message is returned to the routing process which ignores it.

When the television processor 302 receives the "percentage message", it redraws the graph in the first overlay 321 to illustrate the new ratio of yes and no votes.

The operation of the present embodiment in respect of the second overlay 322 will now be described.

When a viewer dials the second number using his telephone 308, 309, the call is answered by the communications processor 303. The communications processor 303 then generates a message comprising an audio feed "function ID" in a routing part and "new call = [channel no.]" in a data part. The channel number identifies a logical channel that the communications processor 303 can use to send signals to the new caller. The message is then sent to the server 301.

The message is received by a routing process at the server 301 which obtains the ID of the control object instance for the second overlay 322 from the input routing table. The routing process then invokes a message handling method of the appropriate control object instance. The method responds to the message by generating a "feed audio" message comprising the function ID and "comms" in the routing part and "[channel no.] = feed audio" in the data part. This message is returned to the routing process which sends it to the communications processor 303 after looking up the destination in the output routing table.

When the communications processor 303 receives the message it responds by connecting the audio feed from the television processor 302 to the logical channel specified in the message. Consequently, the viewer can hear the expert via his telephone 308, 309.

When the viewer hangs up, the communications processor 303 generates a message comprising an audio feed "function ID" in a routing part and "[channel no.] = hung up" in a data part. The message is then sent to the server 301.

The message is received by a routing process at the server 301 which obtains the ID of the control object instance for the second overlay 322 from an input routing table. The routing process then invokes the message handling method of the appropriate control object instance. The method responds to the message by generating an "on hook" message comprising the function ID and "comms" in the routing part and "[channel no.] = on hook" in the data part. This message is returned to the routing process which sends it to the communications processor 303 after looking up the destination in the output routing table.

The communications processor 303 responds by breaking the link between the audio feed from the television processor 302 and the specified logical channel and drops the telephone line associated with the specified channel number.

The operation of the present embodiment in respect of the third overlay 323 will now be described.

When a viewer dials the third number using his telephone 308, 309, the call is answered by the communications processor 303. The communications processor 303 then generates a message comprising an phone "function ID" in a routing part and "new call=[channel no.]" in a data part. The channel number identifies a logical channel that the communications processor 303 can use to send signals to the new caller. The message is then sent to the server 301.

The message is received by a routing process at the server 301 which obtains the ID of the control object instance for the third overlay 323 from the input routing table. The routing process then invokes a message handling method of the appropriate control object instance. The method responds to the message by selecting the ID of a free telephony terminal 312 from a list thereof, setting a busy flag associated with it to true, and generating a "connect" message comprising the function ID and "comms" in the routing part and "[channel no.] = [terminal ID]" in the data part. This message is returned to the routing process which sends it to the communications processor 303 after looking up the destination in the output routing table.

When the communications processor 303 receives the message it responds by connecting the specified telephony terminal 312 to the logical channel specified in the message. The viewer can then talk to the operator of the specified telephony terminal.

If the viewer hangs up, the communications processor 303 generates a message comprising a phone "function ID" in a routing part and "[channel no.] - hung up" in a data part. The message is then sent to the server 301.

If the operator of the telephony terminal 312 terminates to call, the communications processor 303 generates a message comprising a phone "function ID" in a routing part and "[terminal no.] = terminated" in a data part. The message is then sent to the server 301.

When the "hung up" or "terminated" message is received by the routing process at the server 301, the routing process then invokes the message handling method of the appropriate control object instance. The method responds to the message by generating an "disconnect" message comprising the function ID and "comms" in the routing part and "[channel no.] = disconnect" in the data part. This message is returned to the routing process which sends it to the communications processor 303 after looking up the destination in the output routing table.

The communications processor 303 responds by breaking the link between the telephony terminal 312 and the specified logical channel and drops the telephone line associated with the specified channel number. The communications processor 303 then sends a "complete" message, comprising the function ID in the routing part and "[channel no.] = complete" to the server 301. At the server 301, the message is routed to the appropriate control object instance which responds by setting the busy flag for the telephony terminal to false and returning an empty message.

The operation of the present embodiment in respect of the fourth overlay 324 will now be described.

When a viewer dials the fourth number using his telephone 308, 309, the call is answered by the communications processor 303. The communications processor 303 then generates a message comprising an information "function ID" in a routing part and "new call=[channel no.]" in a data part. The channel number identifies a logical channel that the communications processor 303 can use to send signals to the new caller. The message is then sent to the server 301.

The message is received by a routing process at the server 301 which obtains the ID of the control object instance for the fourth overlay 324 from the input routing table. The routing process then invokes a message handling method of the appropriate control object instance. The method responds to the message by generating a "play options" message comprising the function ID and "comms" in the routing part and "[channel no.] = play options" in the data part. This message is returned to the routing process which sends it to the communications processor 303 after looking up the destination in an output routing table.

When the communications processor 303 receives the message it responds by playing an audio file, telling the caller that he can receive additional information by press "1" for short message service, "2" for e-mail and "3" for fax or cancel by pressing "0", via the logical channel specified in the message. The communications processor 303 then waits for a digit to be input. When a "1", "2", "3" or "0" has been entered by the caller, the communications processor 303 generates a "mode" message comprising the function ID in the routing part and "mode=[entered digit]" in the data part.

The "mode" message is routed to the appropriate control object instance at the server 301.

If the mode is "0", the method returns an "on hook" message, comprising the function ID and "comms" in the routing part and "[channel no.] = on hook", which is sent to the communications server 303. The communications server 303 responds in this case, by dropping the telephone call identified by the channel number.

If the mode is " 1 ", "2" or "3", the method returns a "get number" message, comprising the function ID and "comms" in the routing part and "[channel no.] = get number" in the data part. This message is sent to the communications processor 303 which responds by generating a "telephone number" message, comprising the function ID in the routing part and "number = [telephone number]". The telephone number for the viewer is obtained using caller line identification (CLI). The "telephone number" message is sent to the server 301 where it is sent to the message handling method of the appropriate control object instance.

The method looks up the viewer's short message service, e-mail or fax address/number in a registered user database in dependence on the contents of the previously received mode message. If there is not an entry for the telephone number, the method returns an "unregistered" message, comprising the function ID and "comms" in the routing part and "[channel no.] = unregistered" in the data part, which is sent to the communications processor 303. The communications processor 303 responds to this message by playing an audio file through the specified channel and then dropping the line. The audio file gives the view instructions for registering, e.g. by telephone or e-mail or through a web page form.

If the mode is "1" and an short message service number is found, the method sends a message, comprising the function ID and "comms" in the data part and "[channel no.] = [short message service number] in the data part, to the communications server 303. The communications server 303 responds by playing an audio file through the specified channel to inform the user that the information is being sent by short message service and then drops the line. Then it sends the information, which was previously stored at the communication processor 303, in a series of short message service messages to the viewer's mobile telephone 308, 309.

If the mode is "2" and an e-mail address is found, the method sends a message, comprising the function ID and "master" in the data part and "send = [e-mail address, channel no.] in the data part, to the master station 300. The master station 300 responds by adding the e-mail address to a list of addresses to which the information is to be sent and then sends a "spooled" messaged, comprising the function ID in the routing part and "[channel no.] = spooled" in the data part, to the server 301. This message is routed in the normal way to the message handling method of the appropriate control object instance.

Similarly, if the mode is "3" and a fax number is found, the method sends a message, comprising the function ID and "master" in the data part and "send = [fax number, channel no.] in the data part, to the master station 300. The master station 300 responds by adding the fax number to a list of fax numbers to which the information is to be sent and then sends a "spooled" messaged, comprising the function ID in the routing part and "[channel no.] = spooled" in the data part, to the server 301. This message is routed in the normal way to the message handling method of the appropriate control object instance.

On receiving a "spooled" message, the method returns a "spool report" message, comprising the function ID and "comms" in the routing part and "[channel no.] = spooled" in the data part, which is then sent to the communications processor 303.

The communications server 303 responds by playing an audio file through the specified channel to inform the user that the information is being sent by the chosen method and then drops the line.

When the program finishes, an operator at the master station 300 causes the master station to send a shut down command to the server 301 which completes any outstanding transactions and terminates its processing of messages from the communications processor 303. The server 301, the television processor 302 and the communications processor 303 can then be reconfigured for another television programme.

It will be appreciated that the functions associated with the different overlays are not interrelated. Consequently, only one or any combination of these functions, and others not described in detail here, may be used with any television programme.

It will also be appreciated that the ancillary interactive functions available may vary during a television programme. This may be controlled by a sequence of time-dependent messages or by real-time input of commands at the master station 300 by an operator.

## Claims

1. A interactive media system including:-
a user interface comprising an output device having a visual output user interface part (115, 118; 205; 306, 307) located for private use and user input means (114, 117; 206; 308, 309) located for use by a user concurrently with the output user interface part (115, 118; 205; 306, 307), and a server (101; 204; 301),
**characterized by**
the server (101; 204; 301) comprising:-
a state machine (3a, 3b, 3c; 5, 6a, 6b, 6c; 7a, 7b, 7c, 9a, 9b, 9c)
an input routing means (1; 5; 8) for receiving a message from the user input means (114, 117; 206; 308, 309), the message comprising a session reference and data, and for routing at least the data part a received message to the state machine (3a, 3b, 3c) in dependence on the session reference; and
output routing means (4; 8) for routing messages, comprising at least a destination reference and control data for the output device, and for routing said control data to the output device in dependence on said destination reference,
wherein the state machine (3a, 3b, 3c; 5, 6a, 6b, 6c; 7a, 7b, 7c, 9a, 9b, 9c) is responsive to data routed to it by the input routing means (1; 5; 8) to generate a message, comprising at least a destination reference.

2. A system according to claim 1, wherein an additional processing apparatus (202; 302) is included and said destination reference may refer selectively to the user interface or the additional processing means (202; 302).

3. A system according to claim 1 or 2, wherein the server (101; 204; 301) comprises a plurality of state machines (3a, 3b, 3c; 5, 6a, 6b, 6c; 7a, 7b, 7c, 9a, 9b, 9c), each state machine (3a, 3b, 3c; 5, 6a, 6b, 6c; 7a, 7b, 7c, 9a, 9b, 9c) being responsive to data routed to it by the input routing means (1; 5; 8) to provide a message, comprising at least a destination reference identifying the output device and control data for the output device, to the output routing means (4; 8).

4. A system according to claim 1, 2 or 3, wherein the or each state machine comprises an instance of a software object (7a, 7b, 7c).

5. A system according to claim 4, wherein the or each object (7a, 7b, 7c) is a component, the input and output routing means (1, 4; 5; 8) exist in the same process space and the or each component exists in its own process space.

6. A system according to claim 1, 2 or 3, wherein the operation of the or each state machine (3a, 3b, 3c; 5, 6a, 6b, 6c; 7a, 7b, 7c, 9a, 9b, 9c) is defined, at least in part, by a respective control file (6a, 6b, 6c; 9a, 9b, 9c).

7. A system according to claim 6, wherein the or each control file (6a, 6b, 6c; 9a, 9b, 9c) comprises data in the form of a mark-up language.

8. A system according to claim 6, wherein the or each state machine (3a, 3b, 3c; 5, 6a, 6b, 6c; 7a, 7b, 7c, 9a, 9b, 9c) comprises a software object (7a, 7b, 7c), the state changes of the state machine being defined in some cases by methods of said object and in other cases by the contents of the respective control file.

9. A system according to any preceding claim, wherein
the input and output routing means (1; 4, 5; 8) comprise a single software procedure or object (8).

10. A system according to any preceding claim, wherein the user interface comprises a portable computing device (115, 118) having a web browser program and an associated mobile telephone means (114, 117) and said messages are sent between the server (101) and the mobile telephone means (114,117) by means of a messaging service or a telephone (206) and a web server (202) or a telephone (308, 309) and a television broadcasting apparatus (302, 305, 310, 311).

11. A method of providing interactivity to a user, the method including the steps of:-
receiving a server a first message from a user input means (114, 117; 206; 308, 309) of a user interface, the user interface comprising an output device having a visual output user interface part (115, 118; 205; 306, 307) located for private use and the user input means (114, 117; 206; 308, 309) being located for use by a user concurrently with the output user interface part (115, 118; 205; 306, 307) and the message comprising a session reference and data;
routing said first message to a state machine (3a, 3b, 3c; 5, 6a, 6b, 6c; 7a, 7b, 7c, 9a, 9b, 9c) in the server;
using said state machine (3a, 3b, 3c; 5, 6a, 6b, 6c; 7a, 7b, 7c, 9a, 9b, 9c) to generate a second message, comprising at least a destination reference and control data, in response to data in said first message; and
routing said second message to said output device in dependence on said destination reference.

12. A method according to claim 11, including the steps of:-
receiving a third message from said user input means (114, 117; 206; 308, 309);
routing said third message to said state machine (3a, 3b, 3c; 5, 6a, 6b, 6c; 7a, 7b, 7c, 9a, 9b, 9c);
using said state machine (3a, 3b, 3c; 5, 6a, 6b, 6c; 7a, 7b, 7c, 9a, 9b, 9c) to generate a fourth message, comprising at least a destination reference and data, in response to data in said third message; and
routing said fourth message to a device (202; 302) other than said user interface.

13. A method according to claim 11 or 12, wherein said state machine (3a, 3b, 3c; 5, 6a, 6b, 6c; 7a, 7b, 7c, 9a, 9b, 9c) is selected from a plurality of state machines in dependence on said session reference.

14. A method according to claim 11, 12 or 13, wherein the or each state machine (3a, 3b, 3c; 5, 6a, 6b, 6c; 7a, 7b, 7c, 9a, 9b, 9c) comprises an instance of a software object (7a, 7b, 7c).

15. A method according to claim 11, 12 or 13, wherein the operation of the or each state machine (3a, 3b, 3c; 5, 6a, 6b, 6c; 7a, 7b, 7c, 9a, 9b, 9c) is defined, at least in part, by a respective control file (6a, 6b, 6c; 9a, 9b, 9c).

16. A method according to damn 15, wherein the or each control file comprises data in the form of a mark-up language.

17. A method according to claim 16, wherein the or each state machine (3a, 3b, 3c; 5, 6a, 6b, 6c; 7a, 7b, 7c, 9a, 9b, 9c) comprises a software object (7a, 7b, 7c), the state changes of the state machine (3a, 3b, 3c; 5, 6a, 6b, 6c; 7a, 7b, 7c, 9a, 9b, 9c) being defined in some cases by methods of said object (7a, 7b, 7c) and in other cases by the contents of the respective control file (9a, 9b, 9c).

18. A method according to any one of claims 11 to 17, wherein the user interface comprises a portable computing device (115, 118) having a web browser program and an associated mobile telephone means (114, 117) and said messages are sent between the server (101) and the mobile telephone means (114, 117) by means of a messaging service or a telephone (206) and a web server (202) or a telephone (308, 309) and a television broadcasting apparatus (302, 305, 310, 311).

19. A server apparatus for a data dissemination system employing a messaging service of a mobile telephone network (104) and a client (113, 116) with a web browser, the apparatus comprising
receiving means (103) for receiving messages from a mobile telephone network (104);
dispatching means (103) for dispatching message service messages to a mobile station (114, 117) of a mobile telephone network (104); and
a server (101) comprising.-
a state machine (3a, 3b, 3c; 5, 6a, 6b, 6c; 7a, 7b, 7c, 9a, 9b, 9c)
an input routing means (1; 5; 8) for receiving a message from the user input means (114, 117; 206; 308, 309), the message comprising a session reference and data, and for routing at least the data part a received message to the state machine (3a, 3b, 3c) in dependence on the session reference; and
output routing means (4; 8) for routing messages, comprising at least a destination reference and control data for the output device, and for routing said control data to the output device in dependence on said destination reference,
wherein the state machine (3a, 3b, 3c; 5, 6a, 6b, 6c; 7a, 7b, 7c, 9a, 9b, 9c) is responsive to data routed to it by the input routing means (1; 5; 8) to generate a message, comprising at least a destination reference.

20. A server apparatus according to claim 19, wherein the receiving means (103) is configured for receiving message service messages.

21. A server apparatus according to claim 19 or 20, wherein the server (101) comprises a database of users of mobile stations (113, 116) and means for generating object instances (142), each instance being related to a browser page and a mobile terminal user, and the input routing means (1; 5; 8) comprises means (140) for analysing a message, received by the receiving means, to determine to which of a set of supported browser pages it relates.

## Patentansprüche

1. Interaktives Mediasystem, mit:
einer Benutzerschnittstelle, die eine Ausgabeeinrichtung mit einer visuellen Benutzerausgabeschnittstelle hat (115, 118; 205; 306; 307), die für eine private Benutzung angeordnet ist und die eine Benutzereingabeeinrichtung (114, 117; 206; 308, 309) hat, die der Benutzer gemeinsam mit der Benutzerausgabeschnittstelle (115, 118; 205; 306; 307) benutzen kann, und mit einem Server (101; 204; 301),
**gekennzeichnet durch**
den Server (101; 204; 301), der umfasst:
eine Statusmaschine (3a, 3b, 3c; 5, 6a, 6b, 6c; 7a, 7b, 7c, 9a, 9b, 9c),
eine Eingabeleiteinrichtung (1; 5; 8), um eine Nachricht von der Benutzereingabeeinrichtung (114, 117; 206; 308, 309) zu empfangen, wobei die Nachricht eine Sitzungsreferenz und Daten beinhaltet, wobei die Eingabeleiteinrichtung zumindest den Datenanteil einer empfangenen Nachricht an die Statusmaschine (3a, 3b, 3c) in Abhängigkeit von der Sitzungsreferenz leitet; und
eine Ausgabeleiteinrichtung (4; 8), um Nachrichten weiter zu leiten, die zumindest eine Zielreferenz und Kontrolldaten für die Ausgabeeinrichtung umfassen, und die die Kontrolldaten an die Ausgabeeinrichtung in Abhängigkeit von der Zielreferenz weiterleitet,
wobei die Statusmaschine (3a, 3b, 3c; 5, 6a, 6b, 6c; 7a, 7b, 7c, 9a, 9b, 9c) auf Daten antwortet, die dieser **durch** die Eingabeleiteinrichtung (1; 5; 8) zugeleitet werden, indem sie eine Nachricht erzeugt, die zumindest eine Zielreferenz umfasst.

2. System nach Anspruch 1, wobei eine zusätzliche Verarbeitungseinrichtung (202; 302) vorgesehen ist und die Zielreferenz wahlweise auf die Benutzerschnittstelle oder die zusätzliche Verarbeitungseinrichtung (202; 302) verweisen kann.

3. System nach Anspruch 1 oder 2, wobei der Server (101; 204; 301) eine Mehrzahl von Statusmaschinen (3a, 3b, 3c; 5, 6a, 6b, 6c; 7a, 7b, 7c, 9a, 9b, 9c) umfasst, wobei jede Statusmaschine (3a, 3b, 3c; 5, 6a, 6b, 6c; 7a, 7b, 7c, 9a, 9b, 9c) auf Daten antwortet, die dieser durch die Eingabeleiteinrichtung (1; 5; 8) zugeleitet wurden, um eine Nachricht zu erzeugen und an die Ausgabeleiteinrichtung (4; 8) zu leiten, wobei die Nachricht zumindest eine Zielreferenz aufweist, die die Ausgabeeinrichtung identifiziert, und Kontrolldaten für die Ausgabeeinrichtung aufweist.

4. System nach Anspruch 1, 2 oder 3, wobei die oder jede Statusmaschine eine Instanz eines Softwareobjektes (7a, 7b, 7c) umfasst.

5. System nach Anspruch 4, wobei das oder jedes Objekt (7a, 7b, 7c) eine Komponente ist, die Eingabe- und die Ausgabeleiteinrichtung (1, 4; 5; 8) im gleichen Prozeßraum existieren und die oder jede Komponente in einem eigenen Prozeßraum existieren.

6. System nach Anspruch 1, 2 oder 3, wobei der Betrieb der oder jeder Statusmaschine (3a, 3b, 3c; 5, 6a, 6b, 6c; 7a, 7b, 7c, 9a, 9b, 9c) zumindest teilweise durch eine entsprechende Steuerdatei (6a, 6b, 6c; 9a, 9b, 9c) definiert ist.

7. System nach Anspruch 6, wobei die oder jede Steuerdatei (6a, 6b, 6c; 9a, 9b, 9c) Daten umfasst, die in einer Markup-Sprache gehalten sind.

8. System nach Anspruch 6, wobei die oder jede Statusmaschine (3a, 3b, 3c; 5, 6a, 6b, 6c; 7a, 7b, 7c, 9a, 9b, 9c) ein Softwareobjekt (7a, 7b, 7c) umfasst, und wobei die Statusänderungen der Statusmaschine in einigen Fällen durch Methoden der Objekte und in anderen Fällen durch den Inhalt der jeweiligen Steuerdatei definiert sind.

9. System nach einem der vorhergehenden Ansprüche, wobei
die Eingabe- und die Ausgabeleiteinrichtung (1; 4; 5; 8) eine einzelne Software-Prozedur oder Objekt (8) umfassen.

10. System nach einem der vorhergehenden Ansprüche, wobei die Benutzerschnittstelle eine tragbare Computereinheit (115, 118) umfasst, mit einem Internetbrowser-Programm und einer zugehörigen Mobiltelefoneinrichtung (114, 117), wobei die Nachrichten zwischen dem Server (101) und der Mobiltelefoneinrichtung (114, 117) mittels eines Nachrichtendienstes oder mittels eines Telefons (206) und mittels eines Webservers (202) oder mittels eines Telefons (308, 309) und mittels eines Femsehsendegeräts (302, 305, 310, 311) gesendet werden.

11. Verfahren zur Bereitstellung von Interaktion mit einem Benutzer, wobei das Verfahren die folgenden Schritte aufweist:
Empfangen einer ersten Nachricht an einem Server von einer Benutzereingabeeinrichtung (114, 117; 206; 308, 309) einer Benutzerschnittstelle, wobei die Benutzerschnittstelle eine Ausgabeeinrichtung umfasst, die eine visuelle Benutzerausgabeschnittstelle hat (115, 118; 205; 306; 307), die für eine private Benutzung angeordnet ist und die eine Benutzereingabeeinrichtung (114, 117; 206; 308, 309) hat, die der Benutzer gemeinsam mit der Benutzerausgabeschnittstelle (115, 118; 205; 306; 307) benutzen kann, sowie die Nachricht eine Sitzungsreferenz und Daten umfasst;
Weiterleiten der ersten Nachricht an eine Statusmaschine (3a, 3b, 3c; 5, 6a, 6b, 6c; 7a, 7b, 7c, 9a, 9b, 9c) in dem Server;
Benutzen der Statusmaschine (3a, 3b, 3c; 5, 6a, 6b, 6c; 7a, 7b, 7c, 9a, 9b, 9c), um eine zweite Nachricht zu erzeugen, die zumindest eine Zielreferenz und Steuerdaten umfasst, und zwar in Antwort auf die Daten in der ersten Nachricht; und
Weiterleiten der zweiten Nachricht an die Ausgabeeinrichtung in Abhängigkeit von der Zielreferenz.

12. Verfahren nach Anspruch 11, mit den folgenden Schritten:
Empfangen einer dritten Nachricht von der Benutzereingabeeinrichtung (114, 117; 206; 308, 309);
Weiterleiten der dritten Nachricht an die Statusmaschine (3a, 3b, 3c; 5, 6a, 6b, 6c; 7a, 7b, 7c, 9a, 9b, 9c);
Verwenden der Statusmaschine (3a, 3b, 3c; 5, 6a, 6b, 6c; 7a, 7b, 7c, 9a, 9b, 9c), um eine vierte Nachricht zu erzeugen, die zumindest eine Zielreferenz und Daten umfasst, und zwar in Antwort auf die Daten der dritten Nachricht; und
Weiterleiten der vierten Nachricht an eine Einrichtung (202; 302), die nicht die Benutzerschnittstelle ist.

13. Verfahren nach Anspruch 11 oder 12, wobei die Statusmaschine (3a, 3b, 3c; 5, 6a, 6b, 6c; 7a, 7b, 7c, 9a, 9b, 9c) aus einer Vielzahl von Statusmaschinen in Abhängigkeit von der Sitzungsreferenz ausgewählt ist.

14. Verfahren nach Anspruch 11, 12 oder 13, wobei die oder jede Statusmaschine (3a, 3b, 3c; 5, 6a, 6b, 6c; 7a, 7b, 7c, 9a, 9b, 9c) eine Instanz eines Softwareobjektes (7a, 7b, 7c) umfasst.

15. Verfahren nach Anspruch 11, 12 oder 13, wobei der Betrieb der oder jeder Statusmaschine (3a, 3b, 3c; 5, 6a, 6b, 6c; 7a, 7b, 7c, 9a, 9b, 9c) zumindest teilweise durch eine zugehörige Steuerdatei (6a, 6b, 6c, 9a, 9b, 9c) definiert ist.

16. Verfahren nach Anspruch 15, wobei die oder jede Steuerdatei Daten in Form einer Markup-Sprache enthält.

17. Verfahren nach Anspruch 16, wobei die oder jede Statusmaschine (3a, 3b, 3c; 5, 6a, 6b, 6c; 7a, 7b, 7c, 9a, 9b, 9c) ein Softwareobjekt (7a, 7b, 7c) aufweist, wobei die Statusänderungen der Statusmaschine (3a, 3b, 3c; 5, 6a, 6b, 6c; 7a, 7b, 7c, 9a, 9b, 9c) in einigen Fällen durch Methoden der Objekte (7a, 7b, 7c) und in anderen Fällen durch den Inhalt der jeweiligen Steuerdateien (9a, 9b, 9c) definiert sind.

18. Verfahren nach einem der Ansprüche 11 bis 17, wobei die Benutzerschnittstelle eine tragbare Computereinheit (115, 118) umfasst, mit einem Intemetbrowser-Programm und einer zugehörigen Mobiltelefoneinrichtung (114, 117), wobei die Nachrichten zwischen dem Server (101) und der Mobiltelefoneinrichtung (114, 117) mittels eines Nachrichtendienstes oder mittels eines Telefons (206) und mittels eines Webservers (202) oder mittels eines Telefons (308, 309) und mittels eines Fernsehsendegeräts (302, 305, 310, 311) gesendet werden.

19. Servervorrichtung für ein Datenverbreitungssystem, welches einen Nachrichtendienst eines Mobiltelefonnetzwerks (104) und einen Client (113, 116) mit einem Webbrowser benutzt, wobei die Vorrichtung umfasst:
eine Empfangseinrichtung (103) zum Empfangen von Nachrichten von einem Mobiltelefonnetzwerk (104);
eine Sendeeinrichtung (103) zum Versenden von Nachrichtendienstnachrichten an mobile Station (114, 117) eines Mobiltelefonnetzwerks (104); und
einen Server (101) mit:
einer Statusmaschine (3a, 3b, 3c; 5, 6a, 6b, 6c; 7a, 7b, 7c, 9a, 9b, 9c);
einer Eingabeleiteinrichtung (1; 5; 8), um eine Nachricht von der Benutzereingabeeinrichtung (114, 117; 206; 308, 309) zu empfangen, wobei die Nachricht eine Sitzungsreferenz und Daten beinhaltet, wobei die Eingabeleiteinrichtung zumindest den Datenanteil einer empfangenen Nachricht an die Statusmaschine (3a, 3b, 3c) in Abhängigkeit von der Sitzungsreferenz leitet; und
einer Ausgabeleiteinrichtung (4; 8), um Nachrichten weiter zu leiten, die zumindest eine Zielreferenz und Kontrolldaten für die Ausgabeeinrichtung umfassen, und die die Kontrolldaten an die Ausgabeeinrichtung in Abhängigkeit von der Zielreferenz weiterleitet,
wobei die Statusmaschine (3a, 3b, 3c; 5, 6a, 6b, 6c; 7a, 7b, 7c, 9a, 9b, 9c) auf Daten antwortet, die dieser durch die Eingabeleiteinrichtung (1; 5; 8) zugeleitet werden, indem sie eine Nachricht erzeugt, die zumindest eine Zielreferenz umfasst.

20. Servervorrichtung nach Anspruch 19, wobei die Empfangseinrichtung (103) derart konfiguriert ist, dass diese Nachrichtendienstnachrichten empfängt.

21. Servervorrichtung nach Anspruch 19 oder 20, wobei der Server (101 ) eine Datenbank der Benutzer von Mobilstationen (113, 116) und Mittel zur Erzeugung von Objektinstanzen (142) umfasst, wobei jede Instanz mit einer Browserseite und einem Benutzer des mobilen Terminals in Beziehung steht, sowie die Eingabeleiteinrichtung (1; 5; 8) Mittel (140) umfasst, um eine Nachricht zu analysieren, die von der Empfangseinrichtung empfangen worden ist, um zu entscheiden, zu welcher aus einem Satz von unterstützten Browserseiten diese in Beziehung steht.

## Revendications

1. Système de média interactif comprenant :
une interface d'utilisateur comprenant un dispositif de sortie comportant une partie d'interface d'utilisateur de sortie visuelle (115, 118 ; 205 ; 306, 307) située en vue d'un usage privé et un moyen d'entrée de l'utilisateur (114, 117 ; 206 ; 308, 309) situé en vue d'une utilisation par un utilisateur simultanée à la partie d'interface d'utilisateur de sortie (115, 118 ; 205 ; 306, 307), et un serveur (101 ; 204 ; 301),
**caractérisé en ce que**
le serveur (101 ; 204 ; 301) comprend :
une machine à états finis (3a, 3b, 3c ; 5, 6a, 6b, 6c ; 7a, 7b, 7c, 9a, 9b, 9c)
un moyen d'acheminement d'entrée (1 ; 5 ; 8) destiné à recevoir un message du moyen d'entrée de l'utilisateur (114, 117 ; 206 ; 308, 309), le message comprenant une référence de session et des données, et destiné à acheminer au moins la partie de données d'un message reçu vers la machine à états finis (3a, 3b, 3c) suivant la référence de session, et
un moyen d'acheminement de sortie (4 ; 8) destiné à acheminer des messages, comprenant au moins une référence de destination et des données de commande pour le dispositif de sortie, et destiné à acheminer lesdites données de commande vers le dispositif de sortie suivant ladite référence de destination,
dans lequel la machine à états finis (3a, 3b, 3c ; 5, 6a, 6b, 6c ; 7a, 7b, 7c, 9a, 9b, 9c) répond à des données acheminées vers celle-ci grâce au moyen d'acheminement d'entrée (1 ; 5 ; 8) pour générer un message, comprenant au moins une référence de destination.

2. Système selon la revendication 1, dans lequel un dispositif de traitement supplémentaire (202 ; 302) est inclus et ladite référence de destination peut se référer sélectivement à l'interface d'utilisateur ou au moyen de traitement supplémentaire (202 ; 302).

3. Système selon la revendication 1 ou 2, dans lequel le serveur (101 ; 204 ; 301) comprend une pluralité de machines à états finis (3a, 3b, 3c ; 5, 6a, 6b, 6c ; 7a, 7b, 7c, 9a, 9b, 9c), chaque machine à états finis (3a, 3b, 3c ; 5, 6a, 6b, 6c ; 7a, 7b, 7c, 9a, 9b, 9c) répondant à des données qui lui sont acheminées par le moyen d'acheminement d'entrée (1 ; 5 ; 8) pour fournir un message, comprenant au moins une référence de destination identifiant le dispositif de sortie et des données de commande pour le dispositif de sortie, pour le moyen d'acheminement de sortie (4 ; 8).

4. Système selon la revendication 1, 2 ou 3, dans lequel la machine ou chaque machine à états finis comprend une instance d'un objet logiciel (7a, 7b, 7c).

5. Système selon la revendication 4, dans lequel l'objet ou chaque objet (7a, 7b, 7c) est un composant, les moyens d'acheminement d'entrée et de sortie (1, 4 ; 5 ; 8) existent dans le même espace de traitement et le composant ou chaque composant existe dans son propre espace de traitement.

6. Système selon la revendication 1, 2 ou 3, dans lequel la mise en oeuvre de la machine ou de chaque machine à états finis (3a, 3b, 3c ; 5, 6a, 6b, 6c ; 7a, 7b, 7c, 9a, 9b, 9c) est définie, au moins en partie, par un fichier de commande respectif (6a, 6b, 6c ; 9a, 9b, 9c).

7. Système selon la revendication 6, dans lequel le fichier ou chaque fichier de commande (6a, 6b, 6c ; 9a, 9b, 9c) comprend des données sous forme d'un langage de balisage.

8. Système selon la revendication 6, dans lequel la machine ou chaque machine à états finis (3a, 3b, 3c ; 5, 6a, 6b, 6c ; 7a, 7b, 7c, 9a, 9b, 9c) comprend un objet logiciel (7a, 7b, 7c), les changements d'états de la machine à états finis étant définis dans certains cas par des méthodes dudit objet et dans d'autres cas par le contenu du fichier de commande respectif.

9. Système selon l'une quelconque des revendications précédentes, dans lequel
les moyens d'acheminement d'entrée et de sortie (1 ; 4, 5 ; 8) comprennent une seule procédure ou un seul objet logiciel (8).

10. Système selon l'une quelconque des revendications précédentes, dans lequel l'interface d'utilisateur comprend un dispositif informatique portable (115, 118) comportant un programme de navigateur de réseau Web et un moyen de téléphone mobile associé (114, 117) et lesdits messages sont envoyés entre le serveur (101) et le moyen de téléphone mobile (114, 117) au moyen d'un service de messagerie ou d'un téléphone (206) et un serveur de réseau Web (202) ou bien d'un téléphone (308, 309) et un dispositif de télédiffusion de télévision (302, 305, 310, 311).

11. Procédé consistant à procurer une interactivité à un utilisateur, le procédé comprenant les étapes consistant à :
recevoir dans un serveur un premier message provenant d'un moyen d'entrée d'utilisateur (114, 117 ; 206 ; 308, 309) d'une interface d'utilisateur, l'interface d'utilisateur comprenant un dispositif de sortie comportant une partie d'interface d'utilisateur de sortie visuelle (115, 118 ; 205 ; 306, 307) située en vue d'une utilisation privée et le moyen d'entrée de l'utilisateur (114, 117 ; 206 ; 308, 309) étant situé en vue d'une utilisation par un utilisateur simultanée avec la partie d'interface d'utilisateur de sortie (115, 118 ; 205 ; 306, 307) et le message comprenant une référence de session et des données,
acheminer ledit premier message vers une machine à états finis (3a, 3b, 3c ; 5, 6a, 6b, 6c ; 7a, 7b, 7c, 9a, 9b, 9c) dans le serveur,
utiliser ladite machine à états finis (3a, 3b, 3c ; 5, 6a, 6b, 6c ; 7a, 7b, 7c, 9a, 9b, 9c) pour générer un second message, comprenant au moins une référence de destination et des données de commande, en réponse à des données dans ledit premier message, et
acheminer ledit second message vers ledit dispositif de sortie suivant ladite référence de destination.

12. Procédé selon la revendication 11, comprenant les étapes consistant à :
recevoir un troisième message dudit moyen d'entrée d'utilisateur (114, 117 ; 206 ; 308, 309),
acheminer ledit troisième message vers ladite machine à états finis (3a, 3b, 3c ; 5, 6a, 6b, 6c ; 7a, 7b, 7c, 9a, 9b, 9c),
utiliser ladite machine à états finis (3a, 3b, 3c ; 5, 6a, 6b, 6c ; 7a, 7b, 7c, 9a, 9b, 9c) pour générer un quatrième message, comprenant au moins une référence de destination et des données, en réponse à des données dans ledit troisième message, et
acheminer ledit quatrième message vers un dispositif (202 ; 302) autre que ladite interface d'utilisateur.

13. Procédé selon la revendication 11 ou 12, dans lequel ladite machine à états finis (3a, 3b, 3c ; 5, 6a, 6b, 6c ; 7a, 7b, 7c, 9a, 9b, 9c) est choisie parmi une pluralité de machines à états finis suivant ladite référence de session.

14. Procédé selon la revendication 11, 12 ou 13, dans lequel la machine ou chaque machine à états finis (3a, 3b, 3c ; 5, 6a, 6b, 6c ; 7a, 7b, 7c, 9a, 9b, 9c) comprend une instance d'un objet logiciel (7a, 7b, 7c).

15. Procédé selon la revendication 11, 12 ou 13, dans lequel la mise en oeuvre de la machine ou de chaque machine à états finis (3a, 3b, 3c ; 5, 6a, 6b, 6c ; 7a, 7b, 7c, 9a, 9b, 9c) est définie, au moins en partie, par un fichier de commande respectif (6a, 6b, 6c ; 9a, 9b, 9c).

16. Procédé selon la revendication 15, dans lequel le fichier ou chaque fichier de commande comprend des données sous forme d'un langage de balisage.

17. Procédé selon la revendication 16, dans lequel la machine ou chaque machine à états finis (3a, 3b, 3c ; 5, 6a, 6b, 6c ; 7a, 7b, 7c, 9a, 9b, 9c) comprend un objet logiciel (7a, 7b, 7c), les changements d'états de la machine à états finis (3a, 3b, 3c ; 5, 6a, 6b, 6c ; 7a, 7b, 7c, 9a, 9b, 9c) étant définis dans certains cas par des méthodes dudit objet (7a, 7b, 7c) et dans d'autres cas par le contenu du fichier de commande respectif (9a, 9b, 9c).

18. Procédé selon l'une quelconque des revendications 11 à 17, dans lequel l'interface d'utilisateur comprend un dispositif informatique portable (115, 118) comportant un programme de navigateur de réseau Web et un moyen de téléphone mobile associé (114, 117) et lesdits messages sont envoyés entre le serveur (101) et le moyen de téléphone mobile (114, 117) au moyen d'un service de messagerie ou d'un téléphone (206) et un serveur de réseau Web (202) ou bien d'un téléphone (308, 309) et un dispositif de télédiffusion de télévision (302, 305, 310, 311).

19. Dispositif de serveur destiné à un système de distribution de données employant un service de messagerie d'un réseau téléphonique mobile (104) et un client (113, 116) avec un navigateur de réseau Web, le dispositif comprenant
un moyen de réception (103) destiné à recevoir des messages d'un réseau téléphonique mobile (104),
un moyen d'expédition (103) destiné à expédier des messages de service de messagerie vers une station mobile (114, 117) d'un réseau téléphonique mobile (104), et
un serveur (101) comprenant :
une machine à états finis (3a, 3b, 3c ; 5, 6a, 6b, 6c ; 7a, 7b, 7c, 9a, 9b, 9c)
un moyen d'acheminement d'entrée (1 ; 5 ; 8) destiné à recevoir un message du moyen d'entrée de l'utilisateur (114, 117 ; 206 ; 308, 309), le message comprenant une référence de session et des données, et destiné à acheminer au moins la partie de données d'un message reçu vers la machine à états finis (3a, 3b, 3c) suivant la référence de session, et
un moyen d'acheminement de sortie (4 ; 8) destiné à acheminer des messages, comprenant au moins une référence de destination et des données de commande pour le dispositif de sortie, et destiné à acheminer lesdites données de commande vers le dispositif de sortie suivant ladite référence de destination,
dans lequel la machine à états finis (3a, 3b, 3c ; 5, 6a, 6b, 6c ; 7a, 7b, 7c, 9a, 9b, 9c) répond à des données qui lui sont acheminées par le moyen d'acheminement d'entrée (1 ; 5 ; 8) pour générer un message, comprenant au moins une référence de destination.

20. Dispositif de serveur selon la revendication 19, dans lequel le moyen de réception (103) est configuré pour recevoir des messages du service de messagerie.

21. Dispositif de serveur selon la revendication 19 ou 20, dans lequel le serveur (101) comprend une base de données des utilisateurs des stations mobiles (113, 116) et un moyen destiné à générer des instances d'objets (142), chaque instance étant liée à une page de navigateur et à un utilisateur de terminal mobile, et le moyen d'acheminement d'entrée (1 ; 5 ; 8) comprend un moyen (140) destiné à analyser un message, reçu par le moyen de réception, pour déterminer à quelle page d'un ensemble de pages de navigateur prises en compte, il se rapporte.
